# EUROPEAN PATENT APPLICATION

(11) **EP 4 465 744 A1**
(43) Date of publication of application: **20.11.2024**
(21) Application number: 23739923.3
(22) Date of filing: 06.01.2023
(51) Int. Cl.: H04W 74/08

(54) **INFORMATION TRANSMISSION METHODS, APPARATUS, TERMINAL AND NETWORK SIDE DEVICE**

(30) Priority: 11.01.2022 CN 202210027217
(71) Applicant: VIVO MOBILE COMMUNICATION CO., LTD., Dongguan, Guangdong 523863 (CN)
(72) Inventor: MO, Yitao, Dongguan, Guangdong 523863 (CN); YANG, Kun, Dongguan, Guangdong 523863 (CN); WU, Kai, Dongguan, Guangdong 523863 (CN)
(74) Representative: Lavoix
(86) International application number: PCT/CN2023/071038
(87) International publication number: WO 2023/134580

(57) **Abstract**

This application discloses an information transmission method and apparatus, a terminal, and a network side device, and belongs to the technical field of communications. The information transmission method in an embodiment of this application includes: acquiring, by a terminal, random access resource configuration information; selecting, by the terminal, a target downlink reference signal according to the random access resource configuration information; and performing, by the terminal, repeated transmission of a random access message according to the target downlink reference signal.

## Description

### CROSS-REFERENCE TO RELATED APPLICATIONS

This application claims the priority of Chinese Patent Application No. 202210027217.6 filed in China on January 11, 2022, the entire content of which is hereby incorporated by reference.

### TECHNICAL FIELD

This application relates to the technical field of communications, and particularly relates to an information transmission method and apparatus, a terminal, and a network side device.

### BACKGROUND

In the related art, a random access procedure includes: a contention-based random access procedure and a contention-free random access procedure. However, in an existing random access procedure, user equipment (User Equipment, UE, also known as a terminal) may not perform repeated transmission on a physical uplink sheared channel (Physical Uplink Sheared Channel, PUSCH) scheduled by a random access response (Random Access Response, RAR), so that the random access procedure is low in robustness.

### SUMMARY

Embodiments of this application provide an information transmission method and apparatus, a terminal, and a network side device, which can solve the problem that a random access procedure is low in robustness.

In a first aspect, provided is an information transmission method, including:
acquiring, by a terminal, random access resource configuration information;
selecting, by the terminal, a target downlink reference signal according to the random access resource configuration information; and
performing, by the terminal, repeated transmission of a random access message according to the target downlink reference signal.

According to a second aspect, provided is an information transmission method, including:
sending, by a network side device, random access resource configuration information,
where the random access resource configuration information is configured to indicate:
   at least one downlink reference signal, where the downlink reference signal is associated with a first preamble and a second preamble;
   the second preamble is configured to indicate that a terminal has requested repeated transmission of a random access message, the first preamble is a preamble used in a non-contention random access procedure and other than the second preamble, and the first indicating information is configured to trigger the repeated transmission of the random access message;
   or, the random access resource configuration information is configured to indicate at least one of the following:
      at least one downlink reference signal, where the downlink reference signal is associated with a third preamble, and the third preamble is a preamble used in a non-contention random access procedure;
      a first RO set; and
      a second RO set;
      or, the random access resource configuration information is configured to indicate at least one of the following:
         first indicating information, configured to trigger repeated transmission of a random access message; and
         at least one downlink reference signal, where the downlink reference signal is capable of being associated with at least one of the following:
            a fourth preamble, where the first preamble is used in a non-contention random access procedure; and
            the first indicating information,
            where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

In a third aspect, provided is an information transmission apparatus, including:
a first acquisition module, configured to acquire random access resource configuration information;
a first selection module, configured to select a target downlink reference signal according to the random access resource configuration information; and
a transmission module, configured to perform repeated transmission of a random access message according to the target downlink reference signal.

In a fourth aspect, provided is an information transmission apparatus, including:
a first sending module, configured to send random access resource configuration information,
where the random access resource configuration information is configured to indicate:
   at least one downlink reference signal, where the downlink reference signal is associated with a first preamble and a second preamble;
   the second preamble is configured to indicate that a terminal has requested repeated transmission of a random access message, and the first preamble is a preamble used in a non-contention random access procedure and other than the second preamble;
   or, the random access resource configuration information is configured to indicate at least one of the following:
      at least one downlink reference signal, where the downlink reference signal is associated with a third preamble, and the third preamble is a preamble used in a non-contention random access procedure;
      a first RO set; and
      a second RO set;
      or, the random access resource configuration information is configured to indicate at least one of the following:
         first indicating information, configured to trigger repeated transmission of a random access message; and
         at least one downlink reference signal, where the downlink reference signal is capable of being associated with at least one of the following:
            a fourth preamble, where the first preamble is used in a non-contention random access procedure; and
            the first indicating information,
            where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

In a fifth aspect, provided is a terminal, including a processor and a memory, where the memory stores a program or instruction capable of being run on the processor, and the program or instruction, when executed by the processor, implements the steps of the method in the first aspect.

In a sixth aspect, provided is a terminal, including a processor and a communication interface, where the communication interface is configured to acquire random access resource configuration information; and the processor is configured to select a target downlink reference signal according to the random access resource configuration information; and perform repeated transmission of a random access message according to the target downlink reference signal.

In a seventh aspect, provided is a network side device, including a processor and a memory, where the memory stores a program or instruction capable of being run on the processor, and the program or instruction, when executed by the processor, implements the steps of the method in the second aspect.

In an eighth aspect, provided is a network side device, including a processor and a communication interface, where the communication interface is configured to send random access resource configuration information, where the random access resource configuration information is configured to indicate:
at least one downlink reference signal, where the downlink reference signal is associated with a first preamble and a second preamble;
the second preamble is configured to indicate that a terminal has requested repeated transmission of a random access message, and the first preamble is a preamble used in a non-contention random access procedure and other than the second preamble;
or, the random access resource configuration information is configured to indicate at least one of the following:
   at least one downlink reference signal, where the downlink reference signal is associated with a third preamble, and the third preamble is a preamble used in a non-contention random access procedure;
   a first RO set; and
   a second RO set;
   or, the random access resource configuration information is configured to indicate at least one of the following:
      first indicating information, configured to trigger repeated transmission of a random access message; and
      at least one downlink reference signal, where the downlink reference signal is capable of being associated with at least one of the following:
         a fourth preamble, where the first preamble is used in a non-contention random access procedure; and
         the first indicating information,
         where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

In a ninth aspect, provided is an information transmission system, including: a terminal and a network side device, where the terminal may be configured to execute the steps of the information transmission method in the first aspect, and the network side device may be configured to execute the steps of the information transmission method in the second aspect.

In a tenth aspect, provided is a readable storage medium, having a program or instruction stored thereon. The program or instruction, when executed by the processor, implements the steps of the method in the first aspect or the steps of the method in the second aspect.

In an eleventh aspect, provided is a chip, including a processor and a communication interface. The communication interface and the processor are coupled. The processor is configured to run a program or instruction to implement the method in the first aspect or the method in the second aspect.

In a twelfth aspect, provided is a computer program product, stored in a non-transient storage medium. The computer program product is executed by at least one processor to implement the steps of the information transmission method in the first aspect.

In the embodiments of this application, the terminal acquires the random access resource configuration information; selects the target downlink reference signal according to the random access resource configuration information; and performs the repeated transmission of the random access message according to the target downlink reference signal, which is beneficial to improving the robustness of the random access procedure.

### BRIEF DESCRIPTION OF THE DRAWINGS

FIG. 1 is a structural diagram of a communication system to which an embodiment of this application may be applied;
FIG. 2 is a first schematic flowchart of an information transmission method according to an embodiment of this application;
FIG. 3 is a second schematic flowchart of an information transmission method according to an embodiment of this application;
FIG. 4 is a first schematic diagram of modules of an information transmission apparatus according to an embodiment of this application;
FIG. 5 is a structural diagram of a communication device according to an embodiment of this application;
FIG. 6 is a structural diagram of a terminal according to an embodiment of this application;
FIG. 7 is a second schematic diagram of modules of an information transmission apparatus according to an embodiment of this application; and
FIG. 8 is a structural diagram of a network side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some, rather than all of the embodiments of this application. All other embodiments obtained by persons skilled in the art based on the embodiments of this application fall within the protection scope of this application.

The terms "first" and "second" in the specification and claims of this application are used to distinguish similar objects, but are unnecessarily used to describe a specific sequence or order. It is to be understood that the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. In addition, "and/or" in the description and claims represents at least one of connected objects, and the character "/" usually represents that previous and next associated objects form an "or" relationship.

It is notable that the technologies described in this embodiment of this application are not limited to the long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. The terms "system" and "network" in embodiments of this application are usually interchangeably used, and the technologies described may be applied to the systems and radio technologies mentioned above, and may also be applied to other systems and radio technologies. For an exemplary purpose, a new radio (New Radio, NR) system is described in the following description, and the term NR is used in most description below. However, these technologies may also be applied to other applications other than the NR system, for example, a 6th generation (6th Generation, 6G) communication system.

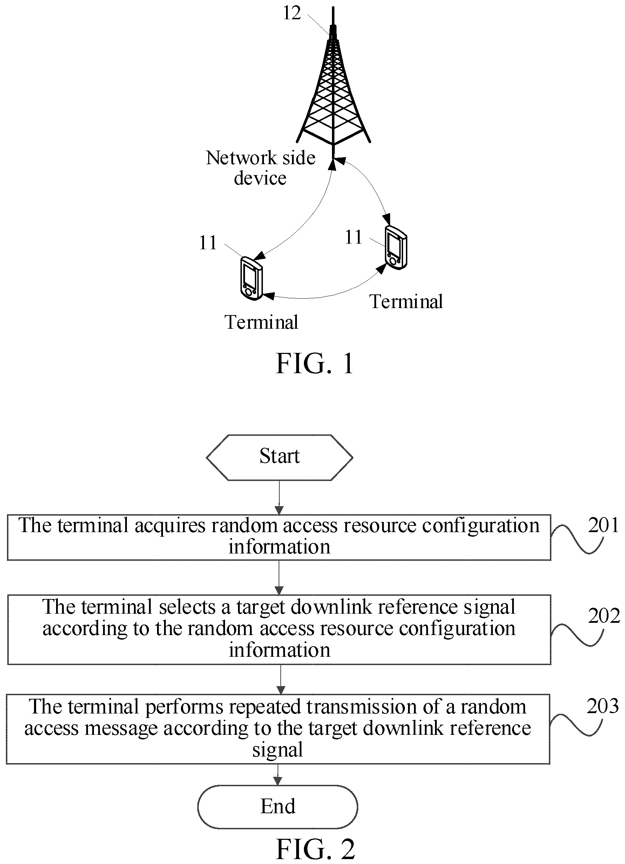

FIG. 1 is a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a notebook, an ultra-mobile personal computer (Ultra-Mobile Person Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (VUE), pedestrian user equipment (PUE), a smart home (a home device with a wireless communication function, such as a refrigerator, a television, a washer or furniture), a game machine, a personal computer (Personal Computer, PC), a teller machine or a self-service machine. The wearable device including: a smart watch, a smart bracelet, a smart earphone, smart eyeglasses, smart jewelry (a smart bangle, a smart chain bracelet, a smart ring, a smart necklace, a smart leglet, a smart anklet and the like), a smart wristband, smart clothing, and the like. It is to be noted that the embodiment of this application does not limit the specific type of the terminal 11. The network side device 12 may include an access network device or a core network device, where the access network device 12 may also be referred to as a wireless access network device, a radio access network (Radio Access Network, RAN), a wireless access network function or a wireless access network unit. The access network device 12 may include a base station, a WLAN access point or a WiFi node and etc. The base station may also be referred to as a node B, an evolution node B (eNB), an access point, a Base Transceiver Station (Base Transceiver Station, BTS), a radio base station, a radio transceiver, a basic service set (Basic Service Set, BSS), an extended service set (Extended Service Set, ESS), a household node B, a household evolution node B, a transmitting receiving point (Transmitting Receiving Point, TRP) or some other appropriate terms in the field provided that the same technical effect is achieved. The base station is not limited to specific technical vocabularies. It is to be noted that only the base station in the NR system is taken as an example in the embodiment of this application, but the specific type of the base station is not limited.

To make persons skilled in the art better understand the embodiments of this application, following descriptions are made first.

An existing random access procedure includes: a contention-based random access procedure (4-step or 2-step RACH) and a contention-free random access procedure.

For the contention-based 4-step random access procedure, the UE sends an Msg1 to a network side. The network side sends an Msg2 (RAR) message to the UE upon receiving the Msg1. In a case that the UE does not receive a RAR matched with a preamble index value in the Msg1 after timeout of a rar window, PREAMBLE_TRANSMISSION_COUNTER is incremented by 1. The UE will send an Msg3 upon receiving the RAR. The network side sends an Msg4 (for example, a contention resolution identifier) to the UE upon receiving the Msg3. The UE receives the Msg4 and judges whether contention resolution is successful. If contention resolution is successful, the random access procedure is successful; otherwise, PREAMBLE_TRANSMISSION_COUNTER is incremented by 1, and the random access procedure is initiated again.

For the contention-based 2-step random access procedure, the UE sends an MsgA to a network side; the network side sends an MsgB message to the UE upon receiving the MsgA; and in a case that the UE does not receive the MsgB for a certain period of time, the UE will increment the counter which counts a number of times the MsgA has been sent by 1 and send the MsgA again.

For the contention-free random access procedure, the UE sends an Msg1 to a network side. The network side sends the Msg2 (RAR) message to the UE upon receiving the Msg1. The message carries uplink grant information and identifier information (for example, a serial number of a random access preamble of the Msg1) of the UE. In a case that a serial number of a random access preamble is identical to the serial number of the random access preamble of the Msg1 sent by the UE, the UE considers that the random access procedure is successful; otherwise, PREAMBLE_TRANSMISSION_COUNTER is incremented by 1, and the random access procedure is initiated again.

The information transmission method provided in embodiments of this application will be described in detail below in conjunction with drawings through some embodiments and application scenarios thereof.

As shown in FIG. 2, an embodiment of this application provides an information transmission method, including:
Step 201: Acquiring, by a terminal, random access resource configuration information.

The random access resource configuration information includes a resource for repeated transmission of a random access message and associated configuration parameters.

Step 202: Selecting, by the terminal, a target downlink reference signal according to the random access resource configuration information.

The target downlink reference signal may be a synchronization signal and PBCH block (Synchronization Signal and PBCH block, SSB) or a CSI reference signal (CSI Reference Signal, CSI-RS).

Step 203: Performing, by the terminal, repeated transmission of a random access message according to the target downlink reference signal.

The random access message includes an Msg1 or Msg3. The Msg3 may be a PUSCH scheduled by a RAR.

According to the information transmission method in the embodiment of this application, the terminal acquires the random access resource configuration information; selects the target downlink reference signal according to the random access resource configuration information; and performs the repeated transmission of the random access message according to the target downlink reference signal, which is beneficial to improving the robustness of the random access procedure.

Optionally, prior to acquiring the random access resource configuration information, the method further includes:
reporting, by the terminal, random access related capability information.

The random access related capability information includes at least one of the following:
the UE supports use of the random access resource corresponding to the repeated transmission of the Msg3 for the contention-free random access procedure;
the UE supports use of the SSB relevant random access resource corresponding to the repeated transmission of the Msg3 for the contention-free random access procedure; and
the UE supports use of the CSI-RS relevant random access resource corresponding to the repeated transmission of the Msg3 for the contention-free random access procedure. Optionally, performing, by the terminal, repeated transmission of a random access message according to the target downlink reference signal includes:
   selecting, by the terminal, a resource for the repeated transmission of the random access message according to the target downlink reference signal, where the resource at least includes a preamble; and
   performing the repeated transmission of the random access message according to the preamble and the target downlink reference signal.

In the embodiment of this application, the resource for the repeated transmission of the random access message includes at least one of a time domain resource, a frequency domain resource, and a code domain resource (for example, a preamble).

As a first optional implementation, the random access resource configuration information is configured to indicate:
at least one downlink reference signal, where the downlink reference signal is associated with a first preamble and a second preamble, the second preamble is used in a non-contention random access procedure and is configured to indicate requesting the repeated transmission of the random access message, and the first preamble is a preamble used in the non-contention random access procedure and other than the second preamble. Each downlink reference signal in the random access resource configuration information may be associated with the first preamble and the second preamble and only a part of the downlink reference signals may be associated with the first preamble and the second preamble.

In the implementation, the first preamble and the second preamble both are used in the non-contention-based (contention-free) random access procedure.

In the first optional implementation, selecting, by the terminal, a target downlink reference signal according to the random access resource configuration information includes at least one of the following:
in a case that a first condition is met, selecting, by the terminal, one downlink reference signal as the target downlink reference signal from at least one downlink reference signal with a measured value higher than a first threshold; and
in a case that a second condition is met, taking, by the terminal, one downlink reference signal indicated by the random access resource configuration information as the target downlink reference signal.

Here, in a case that the second condition is met, only one downlink reference signal is indicated in the random access resource configuration information.

Optionally, selecting, by the terminal, a resource for the repeated transmission of the random access message according to the target downlink reference signal includes:
selecting the second preamble corresponding to the target downlink reference signal; and
taking a sequence number of the second preamble corresponding to the target downlink reference signal as a preamble index.

Optionally, the first condition includes at least one of the following:
a network side device explicitly configures at least one random access resource for requesting the repeated transmission of the random access message through radio resource control (Radio Resource Control, RRC), where the random access resource is associated with the at least one downlink reference signal;
a measured value of downlink path loss reference is less than or equal to a second threshold; the measured value may specifically be L1-RSRP.

Relevant parameters of random access (Random Access, RA) determined by the terminal are associated with the coverage enhancement (Coverage Enhancement, CovEnh) characteristic, and specifically, are associated with a coverage enhancement characteristic of the Msg3; the coverage enhancement characteristic here may be understood as the repeated transmission of the random access message, for example, being associated with the coverage enhancement characteristic of the Msg3 may be understood as being associated with the repeated transmission of the Msg3;
a measured value of at least one of the downlink reference signals is higher than the first threshold.

In the embodiment of this application, the relevant parameters of RA may also be described as a characteristic combination of the RA. The relevant parameters include at least one of the following:
small data transmission (Small Data Transmission, SDT);
radio access network slicing (RAN slicing);
reduced capability (Reduced Capability, Redcap); and
CovEnh.

Optionally, the second condition includes at least one of the following:
a measured value of downlink path loss reference is less than or equal to a second threshold;
relevant parameters of random access (RA) set by the terminal are associated with a coverage enhancement characteristic, and specifically, are associated with a coverage enhancement characteristic of the Msg3;
the random access resource configuration information is acquired through a physical downlink control channel (Physical Downlink Control Channel, PDCCH), that is, the random access resource configuration information is explicitly provided through a PDCCH command;
sequence numbers of the first preamble and the second preamble are not 0.

In the first optional implementation, the terminal parses the random access response in a manner of repeated transmission of a random access message and performs repeated transmission of the Msg3.

A manner of the repeated transmission of the random access message may specifically be a manner of repeating the repeated transmission of the Msg3. The repeated transmission of the Msg3 specifically refers to performing the repeated transmission of the Msg3 according to a number of times of repeated transmission as per the highest two bits of the MSC domain (4-bit length) in the RAR that are considered as the indicated number of times of repeated transmission. The network side generates the RAR in a manner of the repeated transmission of the Msg3 upon successfully receiving the second preamble and performs reception demodulation of the Msg3 according to the assumption of the repeated transmission of the Msg3.

As a second optional implementation, performing, by the terminal, repeated transmission of a random access message according to the target downlink reference signal includes:
selecting, by the terminal, a resource for the repeated transmission of the random access message according to the target downlink reference signal, where the resource at least includes a RACH occasion (RACH occasion, RO) set and a preamble; and
performing the repeated transmission of the random access message according to the RO set, the preamble, and the target downlink reference signal.

Optionally, the random access resource configuration information is configured to indicate at least one of the following:
at least one downlink reference signal, where the downlink reference signal is associated with a third preamble, and the third preamble is a preamble used in a non-contention random access procedure;
a first RO set; and
a second RO set,
where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

Optionally, selecting, by the terminal, a target downlink reference signal according to the random access resource configuration information includes at least one of the following:
in a case that a third condition is met, selecting, by the terminal, one downlink reference signal as the target downlink reference signal from at least one downlink reference signal with a measured value higher than the first threshold; and
in a case that a fourth condition is met, taking, by the terminal, one downlink reference signal indicated by the random access resource configuration information as the target downlink reference signal.

Optionally, selecting, by the terminal, a resource for the repeated transmission of the random access message according to the target downlink reference signal includes at least one of the following:
taking a sequence number of the third preamble corresponding to the target downlink reference signal as a preamble index; and
randomly determining a recently available RO with an equal probability from the second RO set associated with the target downlink reference signal.

Optionally, the third condition includes at least one of the following:
the network side device explicitly configures at least one random access resource for requesting the repeated transmission of the random access message through RRC, where the random access resource is associated with the at least one downlink reference signal; and
the network side device explicitly configures at least one random access resource for requesting the repeated transmission of the random access message through RRC, where the random access resource at least includes the second RO set; the second RO set is associated with the at least one downlink reference signal;
the network side device configures the first RO set;
a measured value of downlink path loss reference is less than or equal to a second threshold;
relevant parameters of random access (RA) determined by the terminal are associated with a coverage enhancement characteristic; and
a measured value of at least one of the downlink reference signals is higher than the first threshold.

Optionally, the fourth condition includes at least one of the following:
the network side device configures the second RO set, and the second RO set is associated with the at least one downlink reference signal;
a measured value of downlink path loss reference is less than or equal to a second threshold;
relevant parameters of random access (RA) determined by the terminal are associated with a coverage enhancement characteristic; and
the random access resource configuration information is acquired through a physical downlink control channel (PDCCH); and
a sequence number corresponding to the third preamble is not 0.

As a third optional implementation, the random access resource configuration information is configured to indicate at least one of the following:
first indicating information, configured to trigger repeated transmission of a random access message; and
at least one downlink reference signal,
where the downlink reference signal is capable of being associated with at least one of the following:
   a fourth preamble, used in a non-contention random access procedure; and
   the first indicating information.

Optionally, in a case that a fifth condition is met, the terminal executes at least one of the following:
determining that a condition for repeated transmission of a message Msg3 is met;
determining that relevant parameters of random access are associated with a coverage enhancement characteristic; and
selecting one downlink reference signal from a target downlink reference signal set as the target downlink reference signal, where the target downlink reference signal set includes at least one downlink reference signal with a measured value higher than a first threshold.

Optionally, selecting, by the terminal, a resource for the repeated transmission of the random access message according to the target downlink reference signal includes:
taking a sequence number of the fourth preamble associated with the target downlink reference signal as a preamble index. Optionally, the fifth condition includes at least one of the following:
the network side device explicitly configures at least one random access resource for requesting the repeated transmission of the random access message through RRC, where the random access resource is associated with the at least one downlink reference signal;
a measured value of at least one of the downlink reference signals is higher than the first threshold and the downlink reference signal is configured with the first indicating information; and
the network side device explicitly configures the first indicating information through RRC and the measured value of at least one of the downlink reference signals is higher than the first threshold.

Optionally, selecting, by the terminal, a target downlink reference signal according to the random access resource configuration information includes:
in a case that a sixth condition is met, selecting, by the terminal, one downlink reference signal as the target downlink reference signal from at least one downlink reference signal with a measured value higher than a first threshold.

Optionally, the sixth condition includes at least one of the following:
the network side device explicitly configures at least one random access resource for requesting the repeated transmission of the random access message through RRC, where the random access resource is associated with the at least one downlink reference signal; and
a measured value of at least one of the downlink reference signals is higher than the first threshold and the downlink reference signal is not configured with the first indicating information.

Optionally, selecting, by the terminal, a target downlink reference signal according to the random access resource configuration information includes:
selecting, by the terminal, the target downlink reference signal according to a counting threshold in the random access resource configuration information and a count value of a terminal counter.

As an optional implementation, prior to selecting, by the terminal, the target downlink reference signal according to a counting threshold in the random access resource configuration information and a count value of a terminal counter, the method further includes:

in a case that a seventh condition is met, the terminal executes at least one of the following:
determining that a condition for requesting repeated transmission of a message Msg3 is met;
setting that relevant parameters of random access are associated with a coverage enhancement characteristic;
determining a compensation difference value for power ramping based on a preamble power ramping counter;
releasing a random access resource used in a non-contention-based random access procedure, where the random access resource does not include a resource for the repeated transmission of the random access message.

Here, after the target downlink reference signal is selected, the repeated transmission of the Msg3 is performed according to the target downlink reference signal and the resource corresponding to the target downlink reference signal for the repeated transmission of the random access message.

Optionally, the terminal parses the random access response (RAR) in a manner of the repeated transmission of the random access message.

Optionally, the compensation difference value for power ramping=(PREAMBLE_POWER_RAMPING_COUNTER-1) × preamble power ramping compensation used in random access procedure for repeated transmission of Msg3 - preamble power ramping compensation used in 4-step random access procedure of NR initially access.

Optionally, the seventh condition includes at least one of the following:
a count value of a first counter of the terminal is greater than or equal to a third threshold in the random access resource configuration information;
the random access resource configuration information includes the random access resource for the repeated transmission of the Msg3;
a measured value of downlink path loss reference is less than or equal to a fifth threshold; and
the relevant parameters of random access (RA) determined by the terminal are not associated with the coverage enhancement characteristic.

Optionally, according to the method in the embodiment of this application, the terminal further executes at least one of the following:
in a case that media access control (Medium Access Control, MAC) considers that RAR reception is unsuccessful or contention resolution is unsuccessful, adding 1 is to a numerical value of the first counter; and
in a case that the MAC considers that the contention resolution is successful, performing a resetting operation on the first counter.

Optionally, an initial value of the first counter is 0. In a case that the MAC considers that the RAR reception is unsuccessful or the contention resolution is unsuccessful, a resetting operation is performed on the first counter, that is, the numerical number of the counter is reset as 0.

As another optional implementation, prior to selecting, by the terminal, the target downlink reference signal according to a counting threshold in the random access resource configuration information and a count value of a terminal counter, the method further includes:
in a case that an eighth condition is met, the terminal executes at least one of the following:
determining that a condition for requesting repeated transmission of a message Msg1 is met;
setting relevant parameters of random access, where the relevant parameters of random access are configured to indicate a coverage enhancement characteristic;
determining a compensation difference value for power ramping based on a preamble power ramping counter;
releasing a random access resource used in a non-contention-based random access procedure, where the random access resource does not include a resource for the repeated transmission of the random access message; and
releasing a random access resource used in a random access procedure of non-contention random access and configured to indicate requesting repeated transmission of an Msg3.

Optionally, the terminal further executes at least one of the following:
in a case that the MAC considers that RAR reception is unsuccessful or contention resolution is unsuccessful, adding 1 to a numerical value of a second counter; and
in a case that the MAC considers that the RAR reception is unsuccessful or the contention resolution is unsuccessful, performing a resetting operation on the second counter.

Optionally, the eighth condition includes at least one of the following:
a count value of a second counter of the terminal is greater than or equal to a sixth threshold in the random access resource configuration information;
in a case that a numerical value of a preamble transmission counter is a sum of a seventh threshold and a preset numerical value,
the random access resource configuration information indicates a random access resource for the repeated transmission of the Msg1;
a measured value of downlink path loss reference is less than or equal to an eighth threshold; and
the relevant parameters of random access (RA) set by the terminal do not indicate the coverage enhancement characteristic.

Optionally, the preset numerical value is 1.

Optionally, an initial value of the second counter is 0. In a case that the MAC considers that the RAR reception is unsuccessful or the contention resolution is unsuccessful, a resetting operation is performed on the second counter, that is, the numerical number of the counter is reset as 0.

Here, after the target downlink reference signal is selected, the repeated transmission of the Msg1 is performed according to the target downlink reference signal and the resource corresponding to the target downlink reference signal for the repeated transmission of the random access message.

Optionally, the terminal parses the random access response (RAR) in a manner of the repeated transmission of the random access message.

Optionally, the method in the embodiment of this application further includes:
the terminal parses the random access response (RAR) in a manner of the repeated transmission of the random access message.

According to the method in the embodiment of this application, the UE is capable of performing repeated transmission of PUSCH scheduled by the RAR (i.e., capable of performing the repeated transmission of the Msg3) in the non-contention-based random access procedure, and moreover, in a case that one UE experiences multiple (consecutive) unsuccessful RAR receptions/unsuccessful CRTs in the random access procedure, the UE may switch the random access resource (for example, switch use of the resource corresponding to non-repeated transmission of the Msg3 to use of the resource corresponding to the repeated transmission of the Msg3), so that the robustness of the random access procedure is improved.

The information transmission method of this application will be described in detail below with reference to specific embodiments.

In a specific embodiment of this application, the terminal first acquires broadcast configuration information and random access dedicated configuration information (RACH-ConfigDedicated) of the network side, where the broadcast configuration information includes: a random access resource for initial access (the resource includes the physical random access channel occasion (Physical Random Access Channel Occasion, RO) resource in a time-frequency domain, a Preamble resource in a code domain) and corresponding parameters for the random access procedure (for example, relevant configuration parameters of the downlink reference signal and the random access resource, a threshold A for selecting the target downlink reference signal of the random access resource of initial access), the random access resource and parameters being used in the contention-based random access procedure; the configuration information further includes: the random access resource for the repeated transmission of the Msg3 and the corresponding parameters for the random access procedure (for example, relevant configuration parameters of the downlink reference signal and the random access resource, the second threshold, and the first threshold);
the random access dedicated configuration information includes:
the random access resource for the contention-free random access procedure (for example, the first preamble) and/or the parameters for the random access procedure (for example, the downlink reference signal associated with the first preamble).
the random access resource for the contention-free random access procedure and for the repeated transmission of the Msg3 (for example, the second preamble) and/or the parameters for the random access procedure (for example, the downlink reference signal associated with the second preamble and the first threshold, where the value of the first threshold may be the same that of the threshold A).

Assume that the network side sends 4 SSBs, the random access dedicated configuration information carries SSB1 and preambles 30 and 31; SSB2 and preambles 32 and 33; and SSB3 and preamble 34. The preambles 30, 32, and 34 are first preambles, and preambles 31 and 33 are second preambles.

After the broadcast configuration information and the random access dedicated configuration information are acquired, the following steps are executed:
Step 1: In a case that the measured value of the downlink path loss reference is lower than or equal to the second threshold, the UE determines requesting the repeated transmission of the Msg3 or a characteristic combination (i.e., the relevant parameters) of the RA set by the UE contains the CovEnh (Msg3-CovEnh) characteristic, and then Step 3 is executed. Otherwise, Step 2 is executed.
Step 2: In a case that the dedicated configuration information provides the resource for the contention-free random access procedure and the resource relevant downlink reference signal (such as SSB3) and the measured value of at least one downlink reference signal in the one or more downlink reference signals is higher than the threshold A, the UE selects one downlink reference signal from the at least one downlink reference signal with a measured value higher than the threshold A as the target downlink reference signal, and takes a sequence number of the first preamble corresponding to the target downlink reference signal as the PREAMBLE_INDEX. (Specifically, in a case that the measured values corresponding to SSB1, SSB2, and SSB3 all are higher than the threshold A, the UE selects one SSB randomly, and in a case that only the measured value corresponding to SSB1 or SSB2 is higher than the threshold A, the UE selects the SSB higher than the threshold. In a case that SSB1 is selected, PREAMBLE_INDEX is set as the SSB1 relevant random access preamble resource for the contention-free random access procedure, i.e., Preamble 30, and in case that SSB2 is selected, in a similar way, Preamble 32 is determined. In a case that only the measured value corresponding to SSB3 is higher than the threshold A, the UE selects SSB3, and PREAMBLE_INDEX is set as the SSB3 relevant random access preamble resource for the contention-free random access procedure, i.e., Preamble 34). Otherwise, the target downlink reference signal is selected according to the random access resource for initial access and/or the parameters for the random access procedure for transmitting the random access message.
Step 3: In a case that the dedicated configuration information provides the resource for the contention-free random access procedure and for the repeated transmission of the Msg3 and the resource relevant downlink reference signal (such as SSB1 and SSB2) and the measured value of at least one downlink reference signal in the one or more downlink reference signals is higher than the first threshold, the UE selects one downlink reference signal from the at least one downlink reference signal with a measured value higher than the first threshold and associated with the random access resource for the repeated transmission of the Msg3 as the target downlink reference signal, and takes a sequence number of the second preamble corresponding to the target downlink reference signal as the preamble index (PREAMBLE_INDEX). (Specifically, in a case that the measured values corresponding to SSB1 and SSB2 both are higher than the first threshold, the UE selects one SSB randomly, and in a case that only the measured value corresponding to SSB1 or SSB2 is higher than the first threshold, the UE selects the SSB higher than the threshold. In a case that SSB1 is selected, PREAMBLE_INDEX is set as the SSB1 relevant random access preamble resource for the contention-free random access procedure and for performing repeated transmission of the Msg3, i.e., Preamble 31, and in case that SSB2 is selected, in a similar way, Preamble 33 is determined). And Step 4 is executed. Otherwise, the target downlink reference signal is selected according to the random access resource for the repeated transmission of the Msg3 and the corresponding parameters for the random access procedure for transmitting the random access message.
Step 4: After the random access message is transmitted, the RAR message is parsed in a manner of the repeated transmission of the Msg3 for performing the repeated transmission of the Msg3.

In another specific embodiment of this application, the terminal first acquires broadcast configuration information and random access configuration information indicated in a PDCCH order of the network side, where the broadcast configuration information includes: a random access resource for initial access (the resource includes the physical random access channel occasion (Physical Random Access Channel Occasion, RO) resource in a time-frequency domain, a Preamble resource in a code domain) and corresponding parameters for the random access procedure (for example, relevant configuration parameters of the downlink reference signal and the random access resource, a threshold A for selecting the target downlink reference signal of the random access procedure of initial access), the random access resource and parameters being used in the contention-based random access procedure; the configuration information further includes: the random access resource for the repeated transmission of the Msg3 and the corresponding parameters for the random access procedure (for example, relevant configuration parameters of the downlink reference signal and the random access resource, the second threshold, and the first threshold);
the random access configuration information indicated in the PDCCH order includes:
the random access resource for the contention-free random access procedure (for example, the first preamble) and/or the parameters for the random access procedure (for example, the downlink reference signal associated with the first preamble).
the random access resource for the contention-free random access procedure and for the repeated transmission of the Msg3 (for example, the second preamble) and/or the parameters for the random access procedure (for example, the downlink reference signal associated with the second preamble, and the first threshold).

Assume that the network side sends 4 SSBs, the random access dedicated configuration information carries SSB1 and preambles 30 and 31; SSB2 and preambles 32 and 33; and SSB3 and preamble 34. The preambles 30, 32, and 34 are first preambles, and preambles 31 and 33 are second preambles.

After the broadcast configuration information and the random access configuration information are acquired, the following steps are executed:
Step 1: In a case that the measured value of the downlink path loss reference is lower than or equal to the second threshold, the UE determines requesting the repeated transmission of the Msg3 or a characteristic combination of the RA set by the UE contains the CovEnh (Msg3-CovEnh) characteristic, and then Step 3 is executed. Otherwise, Step 2 is executed.
Step 2: In a case that the PDCCH order explicitly provides a random access preamble resource and a sequence number corresponding to the random access preamble resource is not 0, the target downlink reference signal is selected as the downlink reference signal indicated in the PDCCH order, the PREAMBLE_INDEX is set as a sequence number of the first preamble indicated the PDCCH order.
Step 3: In a case that the PDCCH order explicitly provides two random access preamble resources and sequence numbers corresponding to the two random access preamble resources both are not 0, the target downlink reference signal is selected as the downlink reference signal indicated in the PDCCH order, the PREAMBLE_INDEX is set as a sequence number of the second preamble indicated the PDCCH order. And Step 4 is executed.
Step 4: After the random access message is transmitted, the RAR message is parsed in a manner of the repeated transmission of the Msg3 for performing the repeated transmission of the Msg3.

In another specific embodiment of this application, the terminal first acquires broadcast configuration information and random access dedicated configuration information (RACH-ConfigDedicated) of the network side, where the broadcast configuration information includes: a random access resource for initial access (the resource includes the physical random access channel occasion (Physical Random Access Channel Occasion, RO) resource in a time-frequency domain, a Preamble resource in a code domain) and corresponding parameters for the random access procedure (for example, relevant configuration parameters of the downlink reference signal and the random access resource, a threshold A for selecting the target downlink reference signal of the random access resource of initial access), the random access resource and parameters being used in the contention-based random access procedure; the configuration information further includes: the random access resource for the repeated transmission of the Msg3 and the corresponding parameters for the random access procedure (for example, relevant configuration parameters of the downlink reference signal and the random access resource, the second threshold, and the first threshold);
the random access dedicated configuration information includes:
the random access resource for the contention-free random access procedure (for example, the first preamble) and/or the parameters for the random access procedure (for example, the downlink reference signal associated with the first preamble).

The parameters for the contention-free random access procedure and for the repeated transmission of the Msg3 (for example, first indicating information associated with the downlink reference signal associated with the first preamble, and the first threshold).

Assume that the network side sends 4 SSBs, the random access dedicated configuration information carries SSB1, preamble 30, and the first indicating information; SSB2, preamble 31, and the first indicating information; and SSB2 and preamble 32.

After the broadcast configuration information and the random access dedicated configuration information are acquired, the following steps are executed:
Step 1: In a case that the measured value of the downlink path loss reference is lower than or equal to the second threshold, the UE determines requesting the repeated transmission of the Msg3 or a characteristic combination of the RA set by the UE contains the CovEnh (Msg3-CovEnh) characteristic, and then Step 3 is executed. Otherwise, Step 2 is executed.
Step 2: In a case that the dedicated configuration information provides the resource for the contention-free random access procedure and the resource relevant downlink reference signal and the measured value of at least one downlink reference signal in the one or more downlink reference signals is higher than the threshold A and the downlink reference signal is not configured with relevant first indicating information, the UE selects one downlink reference signal from the at least one downlink reference signal with a measured value higher than the threshold A as the target downlink reference signal, and takes a sequence number of the preamble corresponding to the target downlink reference signal as the PREAMBLE_INDEX. (Specifically, in a case that the measured values corresponding to SSB1, SSB2, and SSB3 all are higher than the threshold A, the UE may only select SSB3, and PREAMBLE_INDEX is set as the SSB3 relevant random access preamble resource for the contention-free random access procedure, i.e., Preamble 32). Otherwise, the target downlink reference signal is selected according to the random access resource for initial access and/or the parameters for the random access procedure for transmitting the random access message.
Step 3: In a case that the dedicated configuration information provides the random access resource for the contention-free random access procedure and the resource relevant downlink reference signal and the measured value of at least one downlink reference signal in the one or more downlink reference signals is higher than the first threshold and the downlink reference signal is configured with relevant first indicating information, the UE selects one downlink reference signal from the at least one downlink reference signal with a measured value higher than the first threshold and configured with the relevant first indicating information as the target downlink reference signal, and takes a sequence number of the preamble corresponding to the target downlink reference signal as the PREAMBLE_INDEX. (Specifically, in a case that the measured values corresponding to SSB1 and SSB2 both are higher than the first threshold, the UE selects one SSB randomly, and in a case that only the measured value corresponding to SSB1 or SSB2 is higher than the first threshold, the UE selects the SSB higher than the threshold. In a case that SSB1 is selected, PREAMBLE_INDEX is set as the SSB1 relevant random access preamble resource for the contention-free random access procedure, i.e., Preamble 30, and in case that SSB2 is selected, in a similar way, Preamble 31 is determined). And Step 4 is executed. Otherwise, the target downlink reference signal is selected according to the random access resource for the repeated transmission of the Msg3 and the corresponding parameters for the random access procedure for transmitting the random access message.
Step 4: After the random access message is transmitted, the RAR message is parsed in a manner of the repeated transmission of the Msg3 for performing the repeated transmission of the Msg3.

In yet another embodiment of this application, the terminal first acquires broadcast configuration information of the network side, where the broadcast configuration information includes: a resource for a conventional random access (the resource includes the RO resource in a time-frequency domain, a Preamble resource in a code domain) and corresponding parameters for the random access procedure (for example, relevant configuration parameters of the downlink reference signal and the random access resource), the random access resource and parameters being used in the contention-based random access procedure; the broadcast configuration information further includes:
the random access resource for the repeated transmission of the Msg3 and the corresponding parameters for the random access procedure (for example, relevant configuration parameters of the downlink reference signal and the random access resource, the second threshold, and the third threshold);
the random access resource for the repeated transmission of the Msg1 and the corresponding parameters for the random access procedure (for example, relevant configuration parameters of the downlink reference signal and the random access resource, a fourth threshold, a fifth threshold, and a sixth threshold).

The value of the first counter is initialized as 0; the value of the second counter is initialized as 0; and the value of the PREAMBLE_TRANSMISSION_COUNTER is initialized as 0.

Step 1: In a case that the measured value of the downlink path loss reference is lower than or equal to the sixth threshold, the UE determines requesting the repeated transmission of the Msg1 or characteristic combination of the RA set by the UE contains the CovEnh (Msg1-CovEnh) characteristic, and then Step 3 is executed. Otherwise, Step 2 is executed.

Step 2: In a case that the measured value of the downlink path loss reference is lower than or equal to the second threshold, the UE determines requesting the repeated transmission of the Msg3 or a characteristic combination of the RA set by the UE contains the CovEnh (Msg3-CovEnh) characteristic, and then Step 4 is executed. Otherwise, Step 5 is executed.

Step 3: The target downlink reference signal and the resource corresponding to the target downlink reference signal for the repeated transmission of the random access message are selected for performing the repeated transmission of the Msg1.

Step 4A: The target downlink reference signal is selected according to the random access resource for the repeated transmission of the Msg3 and the corresponding parameters for the random access procedure for transmitting the Msg1 or re-transmitting the Msg1 (another RA attempt). In a case that the MAC considers that the RAR reception is unsuccessful, 1 is added to the numerical value of the second counter and/or 1 is added to the numerical value of the PREAMBLE_TRANSMISSION_COUNTER; and in a case that the MAC considers that the contention resolution is unsuccessful, 1 is added to the numerical value of the PREAMBLE_TRANSMISSION_COUNTER; optionally, in a case that the MAC considers that the RAR reception is successful, the resetting operation is performed on the second counter (the numerical number of the counter is reset as 0). Step 4B is executed.

Step 4B: In a case that the count value of the second counter is greater than or equal to the fourth threshold or the value of the PREAMBLE_TRANSMISSION_COUNTER is equal to the fifth threshold+1, the UE considers/sets/switches that the characteristic combination of the RA contains the CovEnh (Msg1-CovEnh) characteristic (or considers that the triggering condition for the repeated transmission of the Msg1 is met), optionally, the UE behavior further includes:
a power ramping compensation difference value is calculated based on the PREAMBLE POWER RAMPING COUNTER;
the random access resource for the conventional contention-free random access procedure is released; and
the random access resource used in the contention-free random access procedure for the repeated transmission of the Msg3 is released.

Step 4C is executed, and in a case that the condition in Step 4B is not met, the current access procedure is continued.

Step 4C: The target downlink reference signal and the resource corresponding to the target downlink reference signal for the repeated transmission of the random access message are selected according to the random access resource corresponding to the repeated transmission of the Msg1 for performing the repeated transmission of the Msg1; additionally, after the repeated transmission of the Msg1 this time, the random access response is parsed in a manner of the repeated transmission of the Msg3.

Step 5A: The target downlink reference signal is selected according to the resource for the conventional random access and the corresponding parameters for the random access procedure for transmitting the Msg1/Msg3 or re-transmitting the Msg1/Msg3 (another RA attempt). In a case that the MAC considers that the RAR reception is unsuccessful, 1 is added to the numerical value of the second counter and/or 1 is added to the numerical value of the PREAMBLE_TRANSMISSION_COUNTER; and in a case that the MAC considers that the contention resolution is unsuccessful, 1 is added to the numerical value of the first counter and/or 1 is added to the numerical value of the PREAMBLE_TRANSMISSION_COUNTER; optionally, in a case that the MAC considers that the contention resolution is successful, the resetting operation is performed on the first counter (the numerical number of the counter is reset as 0); and in a case that the MAC considers that the RAR reception is successful, the resetting operation is performed on the second counter (the numerical number of the counter is reset as 0). Step 5B is executed.

Step 5B-1: In a case that the count value of the second counter is greater than or equal to the fourth threshold or the value of the PREAMBLE_TRANSMISSION_COUNTER is equal to the fifth threshold+1, the UE considers/sets/switches that the characteristic combination of the RA contains the CovEnh (Msg1-CovEnh) characteristic (or considers that the triggering condition for the repeated transmission of the Msg1 is met), optionally, the UE behavior further includes:
a power ramping compensation difference value is calculated based on the PREAMBLE POWER RAMPING COUNTER; and
the random access resource used in the conventional contention-free random access procedure and/or the random access resource used in the contention-free random access procedure for the repeated transmission of the Msg3 are released.

Step 5C is continued. In a case that the condition in Step 5B-1 is not met, the current access procedure is continued.

Step 5B-2: In a case that the count value of the first counter is greater than or equal to the third threshold, the UE considers/sets/switches that the characteristic combination of the RA contains the CovEnh (Msg3-CovEnh) characteristic (or considers that the triggering condition for the repeated transmission of the Msg3 is met), optionally, the UE behavior further includes:
a power ramping compensation difference value is calculated based on the PREAMBLE POWER RAMPING COUNTER; and
the random access resource for the conventional contention-free random access procedure is released.

Step 5D is continued. In a case that the condition in Step 5B-2 is not met, the current access procedure is continued.

Step 5C: The target downlink reference signal and the resource corresponding to the target downlink reference signal for the repeated transmission of the random access message are selected according to the random access resource corresponding to the repeated transmission of the Msg1 for performing the repeated transmission of the Msg1; additionally, after performing repeated transmission of the Msg1 this time, the random access response is parsed in a manner of performing repeated transmission of the Msg3.

Step 5D: The UE behavior may also be one of the following:
the target downlink reference signal and the resource corresponding to the target downlink reference signal for the repeated transmission of the random access message are selected according to the random access resource corresponding to the repeated transmission of the Msg1 for performing the repeated transmission of the Msg1; additionally, after the repeated transmission of the Msg1 this time, the random access response is parsed in a manner of the repeated transmission of the Msg3.

The target downlink reference signal and the resource corresponding to the target downlink reference signal for the repeated transmission of the random access message are selected according to the random access resource corresponding to the repeated transmission of the Msg3 for transmitting the Msg1; additionally, after transmitting the Msg1 this time, the random access response is parsed in a manner of the repeated transmission of the Msg3.

In yet another specific embodiment of this application, the terminal first acquires broadcast configuration information and random access dedicated configuration information of the network side, where the broadcast configuration information includes the random access resource for initial access (the resource includes a RO resource in a time-frequency domain (such as the first RO set), a preamble resource in a code domain) and the corresponding parameters for the random access procedure (for example, the relevant configuration parameters of the downlink reference signal and the random access resource, and a threshold A), the random access resource and parameters are used in the contention-based random access procedure, and the broadcast configuration information further includes:
the random access resource (such as the second RO set) for the repeated transmission of the Msg3 and the corresponding parameters for the random access procedure (for example, relevant configuration parameters of the downlink reference signal and the random access resource, the first threshold, and the second threshold); the random access resource and parameters being used in the contention-based random access procedure;
the random access dedicated configuration information includes:
   the random access resource for the contention-free random access procedure (for example, the first preamble) and/or the parameters for the random access procedure (for example, the downlink reference signal associated with the first preamble).
   the random access resource for the contention-free random access procedure and for the repeated transmission of the Msg3 (for example, the random access resource for the repeated transmission of the Msg3 indicated in the broadcast configuration message) and/or the parameters for the random access procedure (for example, the first threshold).

Assume that the network side sends 4 SSBs, the random access dedicated configuration information carries SSB1 and preamble 30; SSB2 and preamble 31; and SSB3 and preamble 32.

Step 1: In a case that the measured value of the downlink path loss reference is lower than or equal to the second threshold, the UE determines requesting the repeated transmission of the Msg3 or a characteristic combination of the RA set by the UE contains the CovEnh (Msg3-CovEnh) characteristic, and then Step 3 is executed. Otherwise, Step 2 is executed.

Step 2: In a case that the dedicated configuration information provides the resource for the contention-free random access procedure and the resource relevant downlink reference signal and the measured value of at least one downlink reference signal in the one or more downlink reference signals is higher than the threshold A, the UE selects one downlink reference signal from the at least one downlink reference signal with a measured value higher than the threshold A as the target downlink reference signal, and takes a sequence number of the preamble corresponding to the target downlink reference signal as the PREAMBLE_INDEX. (Specifically, in a case that the measured values corresponding to SSB1, SSB2, and SSB3 all are higher than the threshold A, the UE selects one SSB randomly, and in a case that only the measured value corresponding to SSB1 or SSB2 is higher than the threshold A, the UE selects the SSB higher than the threshold. In a case that SSB1 is selected, PREAMBLE_INDEX is set as the SSB1 relevant random access preamble resource for the contention-free random access procedure, i.e., Preamble 30, and in case that SSB2 is selected, in a similar way, Preamble 31 is determined. In a case that only the measured value corresponding to SSB3 is higher than the threshold A, the UE selects SSB3, and PREAMBLE_INDEX is set as the SSB3 relevant random access preamble resource for the contention-free random access procedure, i.e., Preamble 32). A recently available RO is randomly determined with equal probability from the random access resource for initial access associated with the target downlink reference signal (such as the first RO set). Otherwise, the target downlink reference signal is selected according to the random access resource for initial access and/or the parameters for the random access procedure for transmitting the random access message.

Step 3: In a case that the dedicated configuration information provides the random access resource for the contention-free random access procedure and the resource relevant downlink reference signal, the RO set in the random access resource for the contention-free random access procedure provided in the dedicated configuration information is a RO set in the random access resource for the repeated transmission of the Msg3 (for example, the second RO set), and the measured value of at least one downlink reference signal in the one or more downlink reference signals is higher than the first threshold, the UE selects one downlink reference signal from the at least one downlink reference signal with a measured value higher than the first threshold as the target downlink reference signal, and takes a sequence number of the preamble corresponding to the target downlink reference signal as the PREAMBLE_INDEX. (Specifically, in a case that the measured values corresponding to SSB1 and SSB2 both are higher than the first threshold, the UE selects one SSB randomly, and in a case that only the measured value corresponding to SSB1 or SSB2 is higher than the first threshold, the UE selects the SSB higher than the threshold. In a case that SSB1 is selected, PREAMBLE_INDEX is set as the SSB1 relevant random access preamble resource, i.e., Preamble 30), a recently available RO is randomly determined with equal probability from the random access resource (for example, the second RO set) associated with the target downlink reference signal for the repeated transmission of the Msg3. And Step 4 is executed. Otherwise, the target downlink reference signal is selected according to the random access resource for the repeated transmission of the Msg3 and the corresponding parameters for the random access procedure for transmitting the random access message.

Step 4: After the random access message is transmitted, the RAR message is parsed in a manner of the repeated transmission of the Msg3 for performing the repeated transmission of the Msg3.

According to the method in the embodiment of this application, the UE is capable of performing repeated transmission of PUSCH scheduled by the RAR (i.e., capable of performing the repeated transmission of the Msg3) in the non-contention-based random access procedure, and moreover, in a case that one UE experiences multiple (consecutive) unsuccessful RAR receptions/unsuccessful CRTs in the random access procedure, the UE may switch the random access resource (for example, switch use of the resource corresponding to non-repeated transmission of the Msg3 to use of the resource corresponding to the repeated transmission of the Msg3), so that the robustness of the random access procedure is improved.

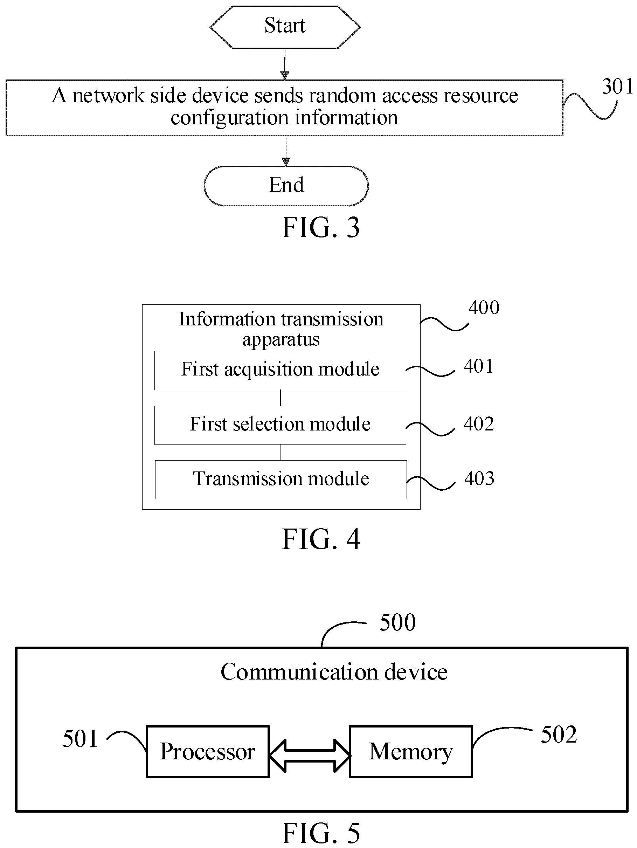

As shown in FIG. 3, an embodiment of this application further provides an information transmission method, including:
Step 301: Sending, by a network side device, random access resource configuration information,
where the random access resource configuration information is configured to indicate:
   at least one downlink reference signal, where the downlink reference signal is associated with a first preamble and a second preamble;
   the second preamble is configured to indicate that a terminal has requested repeated transmission of a random access message, and the first preamble is a preamble used in a non-contention random access procedure and other than the second preamble;
   or, the random access resource configuration information is configured to indicate at least one of the following:
      at least one downlink reference signal, where the downlink reference signal is associated with a third preamble, and the third preamble is a preamble used in a non-contention random access procedure;
      a first RO set; and
      a second RO set;
      or, the random access resource configuration information is configured to indicate at least one of the following:
         first indicating information, configured to trigger repeated transmission of a random access message; and
         at least one downlink reference signal, where the downlink reference signal is capable of being associated with at least one of the following:
            a fourth preamble, where the first preamble is used in a non-contention random access procedure; and
            the first indicating information,
            where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

Optionally, sending, by a network side device, random access resource configuration information includes:
sending, by the network side device, the random access resource configuration information according to random access related capability information reported by the terminal.

Optionally, upon sending, by a network side device, random access resource configuration information, the method further includes:
parsing the random access message sent by the terminal in a manner of the repeated transmission of the random access message.

Optionally, upon sending, by a network side device, random access resource configuration information, the method further includes:
generating a random access response and sending the random access response to the terminal in a manner of the repeated transmission of the random access message.

According to the method in the embodiment of this application, the network side device sends the random access resource configuration information to the terminal, so that the terminal is capable of performing repeated transmission of PUSCH scheduled by the RAR (i.e., capable of performing the repeated transmission of the Msg3) in the non-contention-based random access process, and moreover, in a case that one UE experiences multiple (consecutive) unsuccessful RAR receptions/unsuccessful CRTs in the random access procedure, the UE may switch the random access resource (for example, switch use of the resource corresponding to non-repeated transmission of the Msg3 to use of the resource corresponding to the repeated transmission of the Msg3), so that the robustness of the random access procedure is improved.

According to the information transmission method provided in the embodiment of this application, an executing main body may be an information transmission apparatus. In the embodiment of this application, an information transmission apparatus executing an information transmission method is taken as an example for illustrating the information transmission apparatus provided in the embodiment of this application.

As shown in FIG. 4, an embodiment of this application further provides an information transmission apparatus 400, including:
a first acquisition module 401, configured to acquire random access resource configuration information;
a first selection module 402, configured to select a target downlink reference signal according to the random access resource configuration information; and
a transmission module 403, configured to perform repeated transmission of a random access message according to the target downlink reference signal.

Optionally, the apparatus in the embodiment of this application further includes:
a reporting module, configured to report the random access related capability information.

Optionally, the transmission module includes:
a selection submodule, configured to select a resource for the repeated transmission of the random access message according to the target downlink reference signal, where the resource at least includes a preamble; and
a transmission submodule, configured to perform the repeated transmission of the random access message according to the preamble and the target downlink reference signal.

Optionally, the random access resource configuration information is configured to indicate:
at least one downlink reference signal, where the downlink reference signal is associated with a first preamble and a second preamble, the second preamble is used in a non-contention random access procedure and is configured to indicate requesting the repeated transmission of the random access message, and the first preamble is a preamble used in the non-contention random access procedure and other than the second preamble.

Optionally, the first selection module is configured to execute at least one of the following:
in a case that a first condition is met, selecting, by the terminal, one downlink reference signal as the target downlink reference signal from at least one downlink reference signal with a measured value higher than a first threshold; and
in a case that a second condition is met, taking, by the terminal, one downlink reference signal indicated by the random access resource configuration information as the target downlink reference signal.

Optionally, the selection submodule includes:
a first determination unit, configured to select the second preamble corresponding to the target downlink reference signal; and
a second determination unit, configured to take a sequence number of the second preamble corresponding to the target downlink reference signal as a preamble index.

Optionally, the first condition includes at least one of the following:
a network side device explicitly configures at least one random access resource for requesting the repeated transmission of the random access message through radio resource control (RRC), where the random access resource is associated with the at least one downlink reference signal;
a measured value of downlink path loss reference is less than or equal to a second threshold;
relevant parameters of random access (RA) determined by the terminal are associated with a coverage enhancement characteristic; and
a measured value of at least one of the downlink reference signals is higher than the first threshold.

Optionally, the second condition includes at least one of the following:
a measured value of downlink path loss reference is less than or equal to a second threshold;
relevant parameters of random access (RA) set by the terminal are associated with a coverage enhancement characteristic;
the random access resource configuration information is acquired through a physical downlink control channel (PDCCH); and
sequence numbers of the first preamble and the second preamble are not 0.

Optionally, the transmission module includes:
a first selection submodule, configured to select a resource for the repeated transmission of the random access message according to the target downlink reference signal, where the resource at least includes a random access occasion (RO) set and a preamble; and
a first transmission submodule, configured to perform the repeated transmission of the random access message according to the RO set, the preamble, and the target downlink reference signal.

Optionally, the random access resource configuration information is configured to indicate at least one of the following:
at least one downlink reference signal, where the downlink reference signal is associated with a third preamble, and the third preamble is a preamble used in a non-contention random access procedure;
a first RO set; and
a second RO set,
where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

Optionally, the first selection module is configured to execute at least one of the following:
in a case that a third condition is met, selecting, by the terminal, one downlink reference signal as the target downlink reference signal from at least one downlink reference signal with a measured value higher than a first threshold; and
in a case that a fourth condition is met, taking, by the terminal, one downlink reference signal indicated by the random access resource configuration information as the target downlink reference signal.

Optionally, the first selection submodule includes:
a third determination unit, configured to take a sequence number of the third preamble corresponding to the target downlink reference signal as a preamble index; and
a fourth determination unit, configured to randomly determine a recently available RO with an equal probability from the second RO set associated with the target downlink reference signal.

Optionally, the third condition includes at least one of the following:
the network side device explicitly configures at least one random access resource for requesting the repeated transmission of the random access message through RRC, where the random access resource is associated with the at least one downlink reference signal; and
the network side device explicitly configures at least one random access resource for requesting the repeated transmission of the random access message through RRC, where the random access resource at least includes the second RO set; the second RO set is associated with the at least one downlink reference signal;
the network side device configures the first RO set;
a measured value of downlink path loss reference is less than or equal to a second threshold;
relevant parameters of random access (RA) determined by the terminal are associated with a coverage enhancement characteristic; and
a measured value of at least one of the downlink reference signals is higher than the first threshold.

Optionally, the fourth condition includes at least one of the following:
the network side device configures the second RO set, and the second RO set is associated with the at least one downlink reference signal;
a measured value of downlink path loss reference is less than or equal to a second threshold;
relevant parameters of random access (RA) determined by the terminal are associated with a coverage enhancement characteristic; and
the random access resource configuration information is acquired through a physical downlink control channel (PDCCH); and
a sequence number corresponding to the third preamble is not 0.

Optionally, the random access resource configuration information is configured to indicate at least one of the following:
first indicating information, configured to trigger repeated transmission of a random access message; and
at least one downlink reference signal,
where the downlink reference signal is capable of being associated with at least one of the following:
   a fourth preamble, used in a non-contention random access procedure; and
   the first indicating information.

Optionally, the first selection module is configured to execute at least one of the following:
in a case that a fifth condition is met, the terminal executes at least one of the following:
determining that a condition for repeated transmission of a message Msg3 is met;
determining that relevant parameters of random access are associated with a coverage enhancement characteristic; and
selecting one downlink reference signal from a target downlink reference signal set as the target downlink reference signal, where the target downlink reference signal set includes at least one downlink reference signal with a measured value higher than a first threshold.

Optionally, the selection submodule is configured to take a sequence number of the fourth preamble corresponding to the target downlink reference signal as a preamble index.

The fifth condition includes at least one of the following:
the network side device explicitly configures at least one random access resource for requesting the repeated transmission of the random access message through RRC, where the random access resource is associated with the at least one downlink reference signal;
a measured value of at least one of the downlink reference signals is higher than the first threshold and the downlink reference signal is configured with the first indicating information; and
the network side device explicitly configures the first indicating information through RRC and the measured value of at least one of the downlink reference signals is higher than the first threshold.

Optionally, the first selection module is configured to, in a case that a sixth condition is met, enable the terminal to select one downlink reference signal as the target downlink reference signal from at least one downlink reference signal with the measured value higher than the first threshold.

Optionally, the sixth condition includes at least one of the following:
the network side device explicitly configures at least one random access resource for requesting the repeated transmission of the random access message through RRC, where the random access resource is associated with the at least one downlink reference signal; and
a measured value of at least one of the downlink reference signals is higher than the first threshold and the downlink reference signal is not configured with the first indicating information.

Optionally, the first selection module is configured to select the target downlink reference signal according to a counting threshold in the random access resource configuration information and a count value of a terminal counter.

Optionally, the apparatus in the embodiment of this application further includes:
a first processing module, configured to, prior to selecting, by the first selection module, the target downlink reference signal according to a counting threshold in the random access resource configuration information and a count value of a terminal counter, in a case that the seventh condition is met, enable the terminal to execute at least one of the following:
determining that a condition for requesting repeated transmission of a message Msg3 is met;
setting that relevant parameters of random access are associated with a coverage enhancement characteristic;
determining a compensation difference value for power ramping based on a preamble power ramping counter;
releasing a random access resource used in a non-contention-based random access procedure, where the random access resource does not include a resource for the repeated transmission of the random access message.

Optionally, the seventh condition includes at least one of the following:
a count value of a first counter of the terminal is greater than or equal to a third threshold in the random access resource configuration information;
the random access resource configuration information includes the random access resource for the repeated transmission of the Msg3;
a measured value of downlink path loss reference is less than or equal to a fifth threshold; and
the relevant parameters of random access (RA) determined by the terminal are not associated with the coverage enhancement characteristic.

Optionally, the apparatus in the embodiment of this application further includes:
a second processing module, configured to execute at least one of the following:
in a case that the MAC considers that RAR reception is unsuccessful or contention resolution is unsuccessful, adding 1 to a numerical value of a first counter; and
in a case that the MAC considers that the contention resolution is successful, performing a resetting operation on the first counter.

Optionally, the apparatus in the embodiment of this application further includes:
a third processing module, configured to, in a case that an eighth condition is met, enable the terminal to execute at least one of the following:
determining that a condition for requesting repeated transmission of a message Msg1 is met;
setting relevant parameters of random access, where the relevant parameters of random access are configured to indicate a coverage enhancement characteristic;
determining a compensation difference value for power ramping based on a preamble power ramping counter;
releasing a random access resource used in a non-contention-based random access procedure, where the random access resource does not include a resource for the repeated transmission of the random access message; and
releasing a random access resource used in a random access procedure of non-contention random access and configured to indicate requesting repeated transmission of an Msg3.

Optionally, the apparatus in the embodiment of this application further includes:
a fourth processing module, configured to execute at least one of the following:
in a case that the MAC considers that RAR reception is unsuccessful or contention resolution is unsuccessful, adding 1 to a numerical value of a second counter; and
in a case that the MAC considers that the RAR reception is unsuccessful or the contention resolution is unsuccessful, performing a resetting operation on the second counter.

Optionally, the eighth condition includes at least one of the following:
a count value of a second counter of the terminal is greater than or equal to a sixth threshold in the random access resource configuration information;
in a case that a numerical value of a preamble transmission counter is a sum of a seventh threshold and a preset numerical value,
the random access resource configuration information indicates a random access resource for the repeated transmission of the Msg1;
a measured value of downlink path loss reference is less than or equal to an eighth threshold; and
the relevant parameters of random access (RA) set by the terminal do not indicate the coverage enhancement characteristic.

Optionally, the information transmission apparatus further includes:
a fifth processing module, configured to parse the random access response (RAR) in a manner of the repeated transmission of the random access message.

The apparatus in the embodiment of this application acquires the random access resource configuration information; selects the target downlink reference signal according to the random access resource configuration information; and performs the repeated transmission of the random access message according to the target downlink reference signal, which is beneficial to improving the robustness of the random access procedure.

The information transmission apparatus in the embodiment of this application may be either an electronic device, for example, an electronic device with an operating system, or a component in the electronic device, for example, an integrated circuit or a chip. The electronic device may be either a terminal or another device other than the terminal. As an example, the terminal may include, but not limited to, the type of the terminal 11 above, and the another device may be a server, a network attached storage (Network Attached Storage, NAS) and the like, which are not specifically limited in the embodiment of this application.

The information transmission apparatus provided in the embodiment of this application can implement various processes implemented by the method embodiment shown in FIG. 2 and achieve the same technical effect. To avoid repetition, details are not described herein again.

Optionally, as shown in FIG. 5, an embodiment of this application further provide a communication device 500, including a processor 501 and a memory 502, where the memory 502 stores a program or instruction capable of being run on the processor 501, for example, when the communication device 500 is the terminal, the program or instruction, when executed by the processor 501, implements each step of the information transmission method embodiment applied to the terminal and can achieve the same technical effects. In a case that the communication device 500 is the network side device, the program or instruction, when executed by the processor 501, implements each step of the embodiment of the information transmission method embodiment and can achieve the same technical effect. To avoid repetition, it is not described herein again.

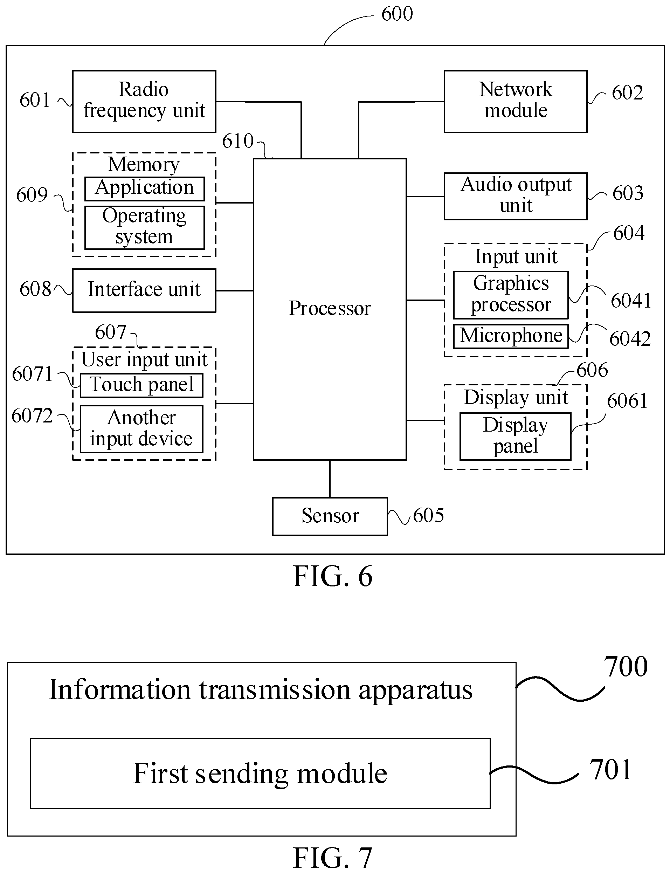

An embodiment of this application further provides a terminal, including a processor and a communication interface, where the communication interface is configured to acquire random access resource configuration information, and the processor is configured to select a target downlink reference signal according to the random access resource configuration information; and perform repeated transmission of a random access message according to the target downlink reference signal. The terminal embodiment corresponds to the method embodiment at the terminal side, and each implementation process and implementation of the above method embodiment are applicable to the terminal embodiment and can achieve the same technical effect. Specifically, FIG. 6 is a schematic structural diagram of hardware of a terminal implementing an embodiment of this application.

The terminal 600 includes, but not limited to: at least some components of a radio frequency unit 601, a network module 602, an audio output unit 603, an input unit 604, a sensor 605, a display unit 606, a user input unit 607, an interface unit 608, a memory 609, a processor 610, and the like.

Persons skilled in the art may understand that the terminal 600 may further include a power supply (e.g., a battery) for supplying power to the components. The power supply may be logically connected to the processor 610 by a power management system, thereby implementing functions such as charging, discharging, and power consumption management by using the power management system. The terminal structure shown in FIG. 6 does not constitute a limitation on the terminal, and the terminal may include more or fewer components than shown, or combine some components, or have different component arrangements, which are not described here in detail.

It is to be understood that in the embodiment of this application, the input unit 604 may include a graphics processing unit (Graphics Processing Unit, GPU) 6041 and a microphone 6042. The graphics processing unit 6041 performs processing on image data of a static picture or a video that is obtained by an image acquisition apparatus (for example, a camera) in a video acquisition mode or an image acquisition mode. The display unit 606 may include a display panel 6061. The display panel 6061 may be configured in a form of a liquid crystal display and an organic light-emitting diode. The user input unit 607 includes at least one of a touch panel 6071 and another input device 6072. The touch panel 6071 is also known as a touch screen. The touch panel 6071 may include two parts: a touch detection apparatus and a touch controller. The another input device 6072 may include, but not limited to, a physical keyboard, a functional key (such as a volume control key or a switch key), a track ball, a mouse, and a joystick, which are not described here in detail.

In the embodiment of this application, after the radio frequency unit 601 receives downlink data from the network side device, the downlink data may be sent to the processor 610 for processing. In addition, the radio frequency unit 601 may send uplink data to the network side device. Generally, the radio frequency unit 601 includes, but is not limited to, an antenna, an amplifier, a transceiver, a coupler, a low noise amplifier, a duplexer, and the like.

The memory 609 may be configured to store a software program or instruction and various data. The memory 609 may mainly include a first storage area storing the program or instruction and a second storage area storing the data. The first storage area may store an operating system, an application program or instruction required by at least one function (such as a sound playback function and an image display function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable Read-Only Memory, PROM), an erasable programmable read-only memory (Erasable Programmable Read-Only Memory, EPROM), an electrically erasable programmable read-only memory (Electrically Erasable Programmable Read-Only Memory, EEPROM) or a flash memory. The non-volatile memory may be a random access memory (Random Access Memory, RAM), a static random access memory (Static Random Access Memory, SRAM) a dynamic random access memory (Dynamic Random Access Memory, DRAM), a synchronous dynamic random access memory (Synchronous Dynamic Random Access Memory, SDRAM), a double data rate synchronous dynamic random access memory (Double Data Rate Synchronous Dynamic Random Access Memory, DDR SDRAM), an enhanced synchronous dynamic random access memory (Enhanced Synchronous Dynamic Random Access Memory, ESDRAM), a synchronous link dynamic random access memory (Synchronous Link Dynamic Random Access Memory, SLDRAM), and a direct Rambus random access memory (Direct Rambus Random Access Memory, DRRAM). The memory 609 in the embodiment of this application includes, but not limited to, these memories and any other suitable types of memories.

The processor 610 may include one or more processing units. Optionally, the processor 610 integrates an application processor and a modem processor, where the application processor mainly processes operations involving an operating system, a user interface, an application program, and the like, and the modem processor mainly processes wireless communication signals, for example, a baseband processor. It will be appreciated that the foregoing modem processor may also not be integrated into the processor 610.

The radio frequency unit 601 is configured to acquire random access resource configuration information;
the processor 610 is configured to select a target downlink reference signal according to the random access resource configuration information; and perform repeated transmission of a random access message according to the target downlink reference signal.

In the embodiment of this application, the random access resource configuration information is acquired; the target downlink reference signal is selected according to the random access resource configuration information; and the repeated transmission of the random access message is performed according to the target downlink reference signal, which is beneficial to improving the robustness of the random access procedure.

Optionally, the radio frequency unit 601 is configured to enable the terminal to report random access related capability information.

Optionally, the processor 610 is configured to select a resource for the repeated transmission of the random access message according to the target downlink reference signal, where the resource at least includes a preamble; and perform the repeated transmission of the random access message according to the preamble and the target downlink reference signal.

Optionally, the random access resource configuration information is configured to indicate:
at least one downlink reference signal, where the downlink reference signal is associated with a first preamble and a second preamble, the second preamble is used in a non-contention random access procedure and is configured to indicate requesting the repeated transmission of the random access message, and the first preamble is a preamble used in the non-contention random access procedure and other than the second preamble.

Optionally, the processor 610 is configured to execute at least one of the following:
in a case that a first condition is met, selecting, by the terminal, one downlink reference signal as the target downlink reference signal from at least one downlink reference signal with a measured value higher than a first threshold; and
in a case that a second condition is met, taking, by the terminal, one downlink reference signal indicated by the random access resource configuration information as the target downlink reference signal.

Optionally, the processor 610 is configured to:
select the second preamble corresponding to the target downlink reference signal; and
take a sequence number of the second preamble corresponding to the target downlink reference signal as a preamble index.

Optionally, the first condition includes at least one of the following:
a network side device explicitly configures at least one random access resource for requesting the repeated transmission of the random access message through radio resource control (RRC), where the random access resource is associated with the at least one downlink reference signal;
a measured value of downlink path loss reference is less than or equal to a second threshold;
relevant parameters of random access (RA) determined by the terminal are associated with a coverage enhancement characteristic; and
a measured value of at least one of the downlink reference signals is higher than the first threshold.

Optionally, the second condition includes at least one of the following:
a measured value of downlink path loss reference is less than or equal to a second threshold;
relevant parameters of random access (RA) set by the terminal are associated with a coverage enhancement characteristic;
the random access resource configuration information is acquired through a physical downlink control channel (PDCCH); and
sequence numbers of the first preamble and the second preamble are not 0.

Optionally, the processor 610 is configured to, enable the terminal to select the resource for the repeated transmission of the random access message according to the target downlink reference signal, where the resource at least includes a random access occasion (RO) and a preamble; and
perform repeated transmission of the random access message according to the RO set, the preamble, and the target downlink reference signal.

Optionally, the random access resource configuration information is configured to indicate at least one of the following:
at least one downlink reference signal, where the downlink reference signal is associated with a third preamble, and the third preamble is a preamble used in a non-contention random access procedure;
a first RO set; and
a second RO set,
where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

Optionally, the processor 610 is configured to execute at least one of the following:
in a case that a third condition is met, selecting, by the terminal, one downlink reference signal as the target downlink reference signal from at least one downlink reference signal with a measured value higher than the first threshold; and
in a case that a fourth condition is met, taking, by the terminal, one downlink reference signal indicated by the random access resource configuration information as the target downlink reference signal.

Optionally, the processor 610 is configured to take a sequence number of the third preamble corresponding to the target downlink reference signal as a preamble index;
randomly determining a recently available RO with an equal probability from the second RO set associated with the target downlink reference signal.

Optionally, the third condition includes at least one of the following:
the network side device explicitly configures at least one random access resource for requesting the repeated transmission of the random access message through RRC, where the random access resource is associated with the at least one downlink reference signal;
the network side device explicitly configures at least one random access resource for requesting the repeated transmission of the random access message through RRC, where the random access resource at least includes the second RO set; the second RO set is associated with the at least one downlink reference signal;
the network side device configures the first RO set;
a measured value of downlink path loss reference is less than or equal to a second threshold;
relevant parameters of random access (RA) determined by the terminal are associated with a coverage enhancement characteristic; and
a measured value of at least one of the downlink reference signals is higher than the first threshold.

Optionally, the fourth condition includes at least one of the following:
the network side device configures the second RO set, and the second RO set is associated with the at least one downlink reference signal;
a measured value of downlink path loss reference is less than or equal to a second threshold;
relevant parameters of random access (RA) determined by the terminal are associated with a coverage enhancement characteristic; and
the random access resource configuration information is acquired through a physical downlink control channel (PDCCH); and
a sequence number corresponding to the third preamble is not 0.

Optionally, the random access resource configuration information indicates at least one of the following:
first indicating information, configured to trigger repeated transmission of a random access message; and
at least one downlink reference signal,
where the downlink reference signal is capable of being associated with at least one of the following:
   a fourth preamble, used in a non-contention random access procedure; and
   the first indicating information.

Optionally, the processor 610 is configured to, in a case that a fifth condition is met, enable the terminal to execute at least one of the following:
determining that a condition for repeated transmission of a message Msg3 is met;
determining that relevant parameters of random access are associated with a coverage enhancement characteristic; and
selecting one downlink reference signal from a target downlink reference signal set as the target downlink reference signal, where the target downlink reference signal set includes at least one downlink reference signal with a measured value higher than a first threshold.

Optionally, the processor 610 is configured to take a sequence number of the fourth preamble associated with the target downlink reference signal as a preamble index.

Optionally, the fifth condition includes at least one of the following:
the network side device explicitly configures at least one random access resource for requesting the repeated transmission of the random access message through RRC, where the random access resource is associated with the at least one downlink reference signal;
a measured value of at least one of the downlink reference signals is higher than the first threshold and the downlink reference signal is configured with the first indicating information; and
the network side device explicitly configures the first indicating information through RRC and the measured value of at least one of the downlink reference signals is higher than the first threshold.

Optionally, the processor 610 is configured to, in a case that a sixth condition is met, to enable the terminal to select one downlink reference signal as the target downlink reference signal from at least one downlink reference signal with the measured value higher than the first threshold.

Optionally, the sixth condition includes at least one of the following:
the network side device explicitly configures at least one random access resource for requesting the repeated transmission of the random access message through RRC, where the random access resource is associated with the at least one downlink reference signal; and
a measured value of at least one of the downlink reference signals is higher than the first threshold and the downlink reference signal is not configured with the first indicating information.

Optionally, the processor 610 is configured to enable the terminal to select the target downlink reference signal according to a counting threshold in the random access resource configuration information and a count value of a terminal counter.

Optionally, the processor 610 is configured to, in a case that a seventh condition is met, enable the terminal to execute at least one of the following:
determining that a condition for requesting repeated transmission of a message Msg3 is met;
setting that relevant parameters of random access are associated with a coverage enhancement characteristic;
determining a compensation difference value for power ramping based on a preamble power ramping counter;
releasing a random access resource used in a non-contention-based random access procedure, where the random access resource does not include a resource for the repeated transmission of the random access message.

Optionally, the seventh condition includes at least one of the following:
a count value of a first counter of the terminal is greater than or equal to a third threshold in the random access resource configuration information;
the random access resource configuration information includes the random access resource for the repeated transmission of the Msg3;
a measured value of downlink path loss reference is less than or equal to a fifth threshold; and
the relevant parameters of random access (RA) determined by the terminal are not associated with the coverage enhancement characteristic.

Optionally, the processor 610 is configured to execute at least one of the following:
in a case that the MAC considers that RAR reception is unsuccessful or contention resolution is unsuccessful, adding 1 to a numerical value of a first counter; and
in a case that the MAC considers that the contention resolution is successful, performing a resetting operation on the first counter.

Optionally, the processor 610 is configured to, in a case that an eighth condition is met, execute at least one of the following:
determining that a condition for requesting repeated transmission of a message Msg1 is met;
setting relevant parameters of random access, where the relevant parameters of random access are configured to indicate a coverage enhancement characteristic;
determining a compensation difference value for power ramping based on a preamble power ramping counter;
releasing a random access resource used in a non-contention-based random access procedure, where the random access resource does not include a resource for the repeated transmission of the random access message; and
releasing a random access resource used in a random access procedure of non-contention random access and configured to indicate requesting repeated transmission of an Msg3.

Optionally, the processor 610 is configured to execute at least one of the following:
in a case that the MAC considers that RAR reception is unsuccessful or contention resolution is unsuccessful, adding 1 to a numerical value of a second counter; and
in a case that the MAC considers that the RAR reception is unsuccessful or the contention resolution is unsuccessful, performing a resetting operation on the second counter.

Optionally, the eighth condition includes at least one of the following:
a count value of a second counter of the terminal is greater than or equal to a sixth threshold in the random access resource configuration information;
in a case that a numerical value of a preamble transmission counter is a sum of a seventh threshold and a preset numerical value,
the random access resource configuration information indicates a random access resource for the repeated transmission of the Msg1;
a measured value of downlink path loss reference is less than or equal to an eighth threshold; and
the relevant parameters of random access (RA) set by the terminal do not indicate the coverage enhancement characteristic.

Optionally, the processor 610 is configured to parse the random access response (RAR) in a manner of performing the repeated transmission of the random access message.

In the embodiment of this application, the random access resource configuration information is acquired; the target downlink reference signal is selected according to the random access resource configuration information; and the repeated transmission of the random access message is performed according to the target downlink reference signal, which is beneficial to improving the robustness of the random access procedure.

As shown in FIG. 7, an embodiment of this application further provides an information transmission apparatus 700, including:
a first sending module 701, configured to send the random access resource configuration information;
where the random access resource configuration information is configured to indicate:
   at least one downlink reference signal, where the downlink reference signal is associated with a first preamble and a second preamble;
   the second preamble is configured to indicate that a terminal has requested repeated transmission of a random access message, the first preamble is a preamble used in a non-contention random access procedure and other than the second preamble, and the first indicating information is configured to trigger the repeated transmission of the random access message;
   or, the random access resource configuration information is configured to indicate at least one of the following:
      at least one downlink reference signal, where the downlink reference signal is associated with a third preamble, and the third preamble is a preamble used in a non-contention random access procedure;
      a first RO set; and
      a second RO set;
      or, the random access resource configuration information is configured to indicate at least one of the following:
         first indicating information, configured to trigger repeated transmission of a random access message; and
         at least one downlink reference signal, where the downlink reference signal is capable of being associated with at least one of the following:
            a fourth preamble, where the first preamble is used in a non-contention random access procedure; and
            the first indicating information,
            where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

Optionally, the apparatus in the embodiment of this application further includes:
a determination module, configured to determine the random access resource configuration information.

Optionally, the apparatus in the embodiment of this application further includes:
a processing module, configured to parse the random access message sent by the terminal in a manner of the repeated transmission of the random access message after the first sending module sends the random access resource configuration information.

Optionally, the apparatus in the embodiment of this application further includes:
a sixth processing module, configured to generate the random access response and send the random access response to the terminal in a manner of repeated transmission of the random access message.

In the embodiment of this application, the network side device sends the random access resource configuration information to the terminal, so that the terminal is capable of performing repeated transmission (i.e., perform repeated transmission of the Msg3) of the PUSCH scheduled by the RAR in the non-contention-based random access procedure, and moreover, in a case that one UE experiences multiple (consecutive) unsuccessful RAR receptions/unsuccessful CRTs in the random access procedure, the UE may switch the random access resource (for example, switch use of the resource corresponding to non-repeated transmission of the Msg3 to use of the resource corresponding to the repeated transmission of the Msg3), so that the robustness of the random access procedure is improved.

The embodiment of this application further provides a network side device, including a processor and a communication interface, where the communication interface is configured to send the random access resource configuration information,
where the random access resource configuration information is configured to indicate:
at least one downlink reference signal, where the downlink reference signal is associated with a first preamble and a second preamble;
the second preamble is configured to indicate that a terminal has requested repeated transmission of a random access message, and the first preamble is a preamble used in a non-contention random access procedure and other than the second preamble;
or, the random access resource configuration information is configured to indicate at least one of the following:
   at least one downlink reference signal, where the downlink reference signal is associated with a third preamble, and the third preamble is a preamble used in a non-contention random access procedure;
   a first RO set; and
   a second RO set;
   or, the random access resource configuration information is configured to indicate at least one of the following:
      first indicating information, configured to trigger repeated transmission of a random access message; and
      at least one downlink reference signal, where the downlink reference signal is capable of being associated with at least one of the following:
         a fourth preamble, where the first preamble is used in a non-contention random access procedure; and
         the first indicating information,
         where the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal. The network side device embodiment corresponds to the network side device method embodiment, and each implementation process and implementation of the above method embodiment are applicable to the network side device embodiment and can achieve the same technical effect.

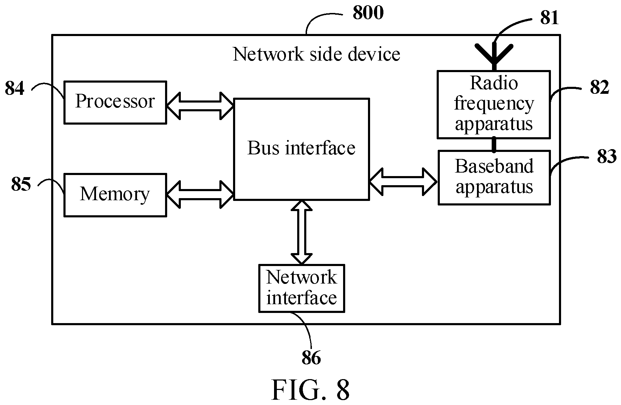

Specifically, an embodiment of this application further provides a network side device. As shown in FIG. 8, the network side device 800 includes: an antenna 81, a radio frequency apparatus 82, an apparatus 83, a processor 84 and a memory 85. The antenna 81 is connected to the radio frequency apparatus 82. In an uplink direction, the radio frequency apparatus 82 receives information through the antenna 81 and transmits the received information to the baseband apparatus 83 for processing. In a downlink direction, the baseband apparatus 83 processes information to be transmitted and transmits the information to the radio frequency apparatus 82. The received information is processed by the radio frequency apparatus 82 and is then transmitted through the antenna 81.

The method executed by the network side device in the above embodiments may be implemented in the baseband apparatus 83. The baseband apparatus 83 includes a baseband processor.

The baseband apparatus 83 may, for example, include at least one baseband board. A plurality of chips are arranged on the baseband board. As shown in FIG. 8, one of the chips is, for example, the baseband processor connected to the memory 85 through a bus interface to call a program in the memory 85, so as to execute the network side device operation shown in the above method embodiment.

The network side device may further include a network interface 86. The interface is, for example, a common public ratio interface (common public radio interface, CPRI).

Specifically, the network side device 800 in the embodiment of this application further includes: an instruction or program stored in a memory 85 and runnable on a processor 84. The processor 84 calls the instruction or program in the memory 85 to execute the method executed by each module in FIG. 7, and achieves the same technical effect. To avoid repetition, details are not described here again.

An embodiment of this application further provides a readable storage medium, storing a program or instruction, where the program or instruction, when executed by a processor, implements each process of the foregoing information transmission method embodiments and can achieve the same technical effects. To avoid repetition, details are not described here again.

The processor is a processor in the terminal in the foregoing embodiment. The readable storage medium includes a computer readable storage medium such as a Read-Only Memory (ROM), a Random Access Memory (RAM), a magnetic disk, or an optical disc.

An embodiment of this application further provides a chip. The chip includes a processor and a communication interface, where the communication interface is coupled to the processor, and the processor is configured to run a program or an instruction to implement each process of the information transmission method embodiment and can achieve the same technical effect. To avoid repetition, details are not described here again.

It is to be understood that the chip mentioned in the embodiment of this application may also be referred to as a system on chip, a-system-chip, a system on a chip or a system-on-a-chip, etc.

An embodiment of this application further provides a computer program product, stored in a non-transient memory medium, where the computer program product, when executed by at least one processor, implements each process of the foregoing information transmission method embodiment and can achieve the same technical effects. To avoid repetition, details are not described here again.

An embodiment of this application further provides an information transmission system, including: a terminal and a network side device, where the terminal may be configured to execute the steps of the information transmission method applied to the terminal side as described above, and the network side device may be configured to execute the steps of the information transmission method applied to the network side device as described above.

It is to be noted that the terms "include", "comprise", or any other variations thereof in this specification are intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it is to be pointed out that the scopes of the method and apparatus in the implementations of this application are not limited to executing functions according to the illustrated or discussed sequence, but may also include execute in a basically simultaneous way or in a reverse sequence based on the functions involved. For example, the described method may be executed according to a sequence different from the described sequence, and steps may further be added, omitted or combined. In addition, features described in some examples may also be combined in other examples.

It is to be noted that each embodiment and implementation in this application may be implemented individually or combined to each other freely for joint implementation, and can achieve corresponding technical effects, which is not limited in this application.

According to the descriptions in the foregoing implementations, persons skilled in the art may clearly learn that the method according to the foregoing embodiment may be implemented by software plus a necessary hardware platform. Of course, it may also be implemented by hardware, but in many cases the former is better implementation. Based on such an understanding, the technical solutions of this application essentially, or the part contributing to the prior art, may be embodied in a form of a software product. The computer software product is stored in a storage medium (for example, a ROM/RAM, a magnetic disk, or an optical disc) including several instructions to enable a terminal (which may be a mobile phone, a computer, a server, air-conditioner, a network device, or the like) to perform the method described in each embodiment of this application.

The embodiments of this application have been described above with reference to the accompanying drawings. This application is not limited to the specific implementations described above, and the specific implementations described above are merely exemplary rather than restrictive. Those of ordinary skill in the art may make various variations under the teaching of the this application without departing from the spirit of this application and the protection scope of the claims, and such variations shall all fall within the protection scope of this application.

## Claims

1. An information transmission method, comprising:
acquiring, by a terminal, random access resource configuration information;
selecting, by the terminal, a target downlink reference signal according to the random access resource configuration information; and
performing, by the terminal, repeated transmission of a random access message according to the target downlink reference signal.

2. The method according to claim 1, wherein prior to performing repeated transmission of a random access message, the method further comprises:
reporting, by the terminal, random access related capability information.

3. The method according to claim 1, wherein performing, by the terminal, repeated transmission of a random access message according to the target downlink reference signal comprises:
selecting, by the terminal, a resource for the repeated transmission of the random access message according to the target downlink reference signal, wherein the resource at least comprises a preamble; and
performing the repeated transmission of the random access message according to the preamble and the target downlink reference signal.

4. The method according to claim 3, wherein the random access resource configuration information is configured to indicate:
at least one downlink reference signal, wherein the downlink reference signal is associated with a first preamble and a second preamble, the second preamble is used in a non-contention random access procedure and is configured to indicate requesting the repeated transmission of the random access message, and the first preamble is a preamble used in the non-contention random access procedure and other than the second preamble.

5. The method according to claim 4, wherein selecting, by the terminal, a target downlink reference signal according to the random access resource configuration information comprises at least one of the following:
in a case that a first condition is met, selecting, by the terminal, one downlink reference signal as the target downlink reference signal from at least one downlink reference signal with a measured value higher than a first threshold; and
in a case that a second condition is met, taking, by the terminal, one downlink reference signal indicated by the random access resource configuration information as the target downlink reference signal.

6. The method according to claim 5, wherein selecting, by the terminal, a resource for the repeated transmission of the random access message according to the target downlink reference signal comprises:
selecting the second preamble corresponding to the target downlink reference signal; and
taking a sequence number of the second preamble corresponding to the target downlink reference signal as a preamble index.

7. The method according to claim 5 or 6, wherein the first condition comprises at least one of the following:
a network side device explicitly configures at least one random access resource for requesting the repeated transmission of the random access message through radio resource control (RRC), wherein the random access resource is associated with the at least one downlink reference signal;
a measured value of downlink path loss reference is less than or equal to a second threshold;
relevant parameters of random access (RA) determined by the terminal are associated with a coverage enhancement characteristic; and
a measured value of at least one of the downlink reference signals is higher than the first threshold.

8. The method according to claim 5, wherein the second condition comprises at least one of the following:
a measured value of downlink path loss reference is less than or equal to a second threshold;
relevant parameters of random access (RA) set by the terminal are associated with a coverage enhancement characteristic;
the random access resource configuration information is acquired through a physical downlink control channel (PDCCH); and
sequence numbers of the first preamble and the second preamble are not 0.

9. The method according to claim 1, wherein performing, by the terminal, repeated transmission of a random access message according to the target downlink reference signal comprises:
selecting, by the terminal, a resource for the repeated transmission of the random access message according to the target downlink reference signal, wherein the resource at least comprises a random access occasion (RO) and a preamble; and
performing the repeated transmission of the random access message according to the RO set, the preamble, and the target downlink reference signal.

10. The method according to claim 9, wherein the random access resource configuration information is configured to indicate at least one of the following:
at least one downlink reference signal, wherein the downlink reference signal is associated with a third preamble, and the third preamble is a preamble used in a non-contention random access procedure;
a first RO set; and
a second RO set,
wherein the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

11. The method according to claim 10, wherein selecting, by the terminal, a target downlink reference signal according to the random access resource configuration information comprises at least one of the following:
in a case that a third condition is met, selecting, by the terminal, one downlink reference signal as the target downlink reference signal from at least one downlink reference signal with a measured value higher than a first threshold; and
in a case that a fourth condition is met, taking, by the terminal, one downlink reference signal indicated by the random access resource configuration information as the target downlink reference signal.

12. The method according to claim 11, wherein selecting, by the terminal, a resource for the repeated transmission of the random access message according to the target downlink reference signal comprises:
taking a sequence number of the third preamble corresponding to the target downlink reference signal as a preamble index; and
randomly determining a recently available RO with an equal probability from the second RO set associated with the target downlink reference signal.

13. The method according to claim 11 or 12, wherein the third condition comprises at least one of the following:
the network side device explicitly configures at least one random access resource for requesting the repeated transmission of the random access message through RRC, wherein the random access resource is associated with the at least one downlink reference signal;
the network side device explicitly configures at least one random access resource for requesting the repeated transmission of the random access message through RRC, wherein the random access resource at least comprises the second RO set; the second RO set is associated with the at least one downlink reference signal;
the network side device configures the first RO set;
a measured value of downlink path loss reference is less than or equal to a second threshold;
relevant parameters of random access (RA) determined by the terminal are associated with a coverage enhancement characteristic; and
a measured value of at least one of the downlink reference signals is higher than the first threshold.

14. The method according to claim 11 or 12, wherein the fourth condition comprises at least one of the following:
the network side device configures the second RO set, and the second RO set is associated with the at least one downlink reference signal;
a measured value of downlink path loss reference is less than or equal to a second threshold;
relevant parameters of random access (RA) determined by the terminal are associated with a coverage enhancement characteristic;
the random access resource configuration information is acquired through a physical downlink control channel (PDCCH); and
a sequence number corresponding to the third preamble is not 0.

15. The method according to claim 3, wherein the random access resource configuration information is configured to indicate at least one of the following:
first indicating information, configured to trigger the repeated transmission of the random access message; and
at least one downlink reference signal,
wherein the downlink reference signal is capable of being associated with at least one of the following:
a fourth preamble, used in a non-contention random access procedure; and
the first indicating information.

16. The method according to claim 15, further comprising:
in a case that a fifth condition is met, the terminal executes at least one of the following:
determining that a condition for repeated transmission of a message Msg3 is met;
determining that relevant parameters of random access are associated with a coverage enhancement characteristic; and
selecting one downlink reference signal from a target downlink reference signal set as the target downlink reference signal, wherein the target downlink reference signal set comprises at least one downlink reference signal with a measured value higher than a first threshold.

17. The method according to claim 15 or 16, wherein selecting, by the terminal, a resource for the repeated transmission of the random access message according to the target downlink reference signal comprises:
taking a sequence number of the fourth preamble associated with the target downlink reference signal as a preamble index.

18. The method according to claim 16, wherein the fifth condition comprises at least one of the following:
the network side device explicitly configures at least one random access resource for requesting the repeated transmission of the random access message through RRC, wherein the random access resource is associated with the at least one downlink reference signal;
a measured value of at least one of the downlink reference signals is higher than the first threshold and the downlink reference signal is configured with the first indicating information; and
the network side device explicitly configures the first indicating information through RRC and the measured value of at least one of the downlink reference signals is higher than the first threshold.

19. The method according to claim 15 or 16, wherein selecting, by the terminal, a target downlink reference signal according to the random access resource configuration information comprises:
in a case that a sixth condition is met, selecting, by the terminal, one downlink reference signal as the target downlink reference signal from at least one downlink reference signal with a measured value higher than a first threshold.

20. The method according to claim 19, wherein the sixth condition comprises at least one of the following:
the network side device explicitly configures at least one random access resource for requesting the repeated transmission of the random access message through RRC, wherein the random access resource is associated with the at least one downlink reference signal; and
a measured value of at least one of the downlink reference signals is higher than the first threshold and the downlink reference signal is not configured with the first indicating information.

21. The method according to claim 1, wherein selecting, by the terminal, a target downlink reference signal according to the random access resource configuration information comprises:
selecting, by the terminal, the target downlink reference signal according to a counting threshold in the random access resource configuration information and a count value of a terminal counter.

22. The method according to claim 21, wherein prior to selecting, by the terminal, the target downlink reference signal according to a counting threshold in the random access resource configuration information and a count value of a terminal counter, the method further comprises:
in a case that a seventh condition is met, the terminal executes at least one of the following:
determining that a condition for requesting repeated transmission of a message Msg3 is met;
setting that relevant parameters of random access are associated with a coverage enhancement characteristic;
determining a compensation difference value for power ramping based on a preamble power ramping counter;
releasing a random access resource used in a non-contention-based random access procedure, wherein the random access resource does not comprise a resource for the repeated transmission of the random access message.

23. The method according to claim 22, wherein the seventh condition comprises at least one of the following:
a count value of a first counter of the terminal is greater than or equal to a third threshold in the random access resource configuration information;
the random access resource configuration information comprises a random access resource for the repeated transmission of the Msg3;
a measured value of downlink path loss reference is less than or equal to a fifth threshold; and
the relevant parameters of random access (RA) determined by the terminal are not associated with the coverage enhancement characteristic.

24. The method according to claim 22, wherein the terminal further executes at least one of the following:
in a case that media access control (MAC) considers that RAR reception is unsuccessful or contention resolution is unsuccessful, adding 1 to a numerical value of the first counter; and
in a case that the MAC considers that the contention resolution is successful, performing a resetting operation on the first counter.

25. The method according to claim 22, wherein prior to selecting, by the terminal, the target downlink reference signal according to a counting threshold in the random access resource configuration information and a count value of a terminal counter, the method further comprises:
in a case that an eighth condition is met, the terminal executes at least one of the following:
determining that a condition for requesting repeated transmission of a message Msg1 is met;
setting relevant parameters of random access, wherein the relevant parameters of random access are configured to indicate a coverage enhancement characteristic;
determining a compensation difference value for power ramping based on a preamble power ramping counter;
releasing a random access resource used in a non-contention-based random access procedure, wherein the random access resource does not comprise a resource for the repeated transmission of the random access message; and
releasing a random access resource used in a non-contention random access procedure and configured to indicate requesting repeated transmission of an Msg3.

26. The method according to claim 25, wherein the terminal further executes at least one of the following:
in a case that the MAC considers that RAR reception is unsuccessful or contention resolution is unsuccessful, adding 1 to a numerical value of a second counter; and
in a case that the MAC considers that the RAR reception is unsuccessful or the contention resolution is unsuccessful, performing a resetting operation on the second counter.

27. The method according to claim 25, wherein the eighth condition comprises at least one of the following:
a count value of a second counter of the terminal is greater than or equal to a sixth threshold in the random access resource configuration information;
in a case that a numerical value of a preamble transmission counter is a sum of a seventh threshold and a preset numerical value,
the random access resource configuration information indicates a random access resource for the repeated transmission of the Msg1;
a measured value of downlink path loss reference is less than or equal to an eighth threshold; and
the relevant parameters of random access (RA) set by the terminal do not indicate the coverage enhancement characteristic.

28. The method according to claim 1, further comprising:
parsing, by the terminal, a random access response (RAR) in a manner of the repeated transmission of the random access message.

29. An information transmission method, comprising:
sending, by a network side device, random access resource configuration information,
wherein the random access resource configuration information is configured to indicate:
at least one downlink reference signal, wherein the downlink reference signal is associated with a first preamble and a second preamble;
the second preamble is configured to indicate that a terminal has requested repeated transmission of a random access message, and the first preamble is a preamble used in a non-contention random access procedure and other than the second preamble;
or, the random access resource configuration information is configured to indicate at least one of the following:
at least one downlink reference signal, wherein the downlink reference signal is associated with a third preamble, and the third preamble is a preamble used in a non-contention random access procedure;
a first RO set; and
a second RO set;
or, the random access resource configuration information is configured to indicate at least one of the following:
first indicating information, configured to trigger repeated transmission of a random access message;
at least one downlink reference signal, wherein the downlink reference signal is capable of being associated with at least one of the following:
a fourth preamble, wherein the first preamble is used in a non-contention random access procedure; and
the first indicating information,
wherein the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

30. The method according to claim 29, wherein sending, by a network side device, random access resource configuration information comprises:
sending, by the network side device, the random access resource configuration information according to random access related capability information reported by the terminal.

31. The method according to claim 29, wherein upon sending, by a network side device, random access resource configuration information, the method further comprises:
parsing the random access message sent by the terminal in a manner of the repeated transmission of the random access message.

32. The method according to claim 29, wherein upon sending, by a network side device, random access resource configuration information, the method further comprises:
generating a random access response and sending the random access response to the terminal in a manner of the repeated transmission of the random access message.

33. An information transmission apparatus, comprising:
a first acquisition module, configured to acquire random access resource configuration information;
a first selection module, configured to select a target downlink reference signal according to the random access resource configuration information; and
a transmission module, configured to perform repeated transmission of a random access message according to the target downlink reference signal.

34. The apparatus according to claim 33, wherein the transmission module comprises:
a selection submodule, configured to select a resource for the repeated transmission of the random access message according to the target downlink reference signal, wherein the resource at least comprises a preamble; and
a transmission submodule, configured to perform the repeated transmission of the random access message according to the preamble and the target downlink reference signal.

35. An information transmission apparatus, comprising:
a first sending module, configured to send random access resource configuration information,
wherein the random access resource configuration information is configured to indicate:
at least one downlink reference signal, wherein the downlink reference signal is associated with a first preamble and a second preamble;
the second preamble is configured to indicate that a terminal has requested repeated transmission of a random access message, and the first preamble is a preamble used in a non-contention random access procedure and other than the second preamble;
or, the random access resource configuration information is configured to indicate at least one of the following:
at least one downlink reference signal, wherein the downlink reference signal is associated with a third preamble, and the third preamble is a preamble used in a non-contention random access procedure;
a first RO set; and
a second RO set;
or, the random access resource configuration information is configured to indicate at least one of the following:
first indicating information, configured to trigger repeated transmission of a random access message; and
at least one downlink reference signal, wherein the downlink reference signal is capable of being associated with at least one of the following:
a fourth preamble, wherein the first preamble is used in a non-contention random access procedure; and
the first indicating information,
wherein the second RO set is an RO set at least used in the non-contention random access procedure and configured to indicate requesting the repeated transmission of the random access message or an RO set at least used in a contention random access procedure and configured to indicate requesting the repeated transmission of the random access message, the first RO set is an RO set at least used in the non-contention random access procedure or at least used in the contention random access procedure, and different from the second RO set, and the first RO set and the second RO set have an associated relationship with the downlink reference signal.

36. The apparatus according to claim 35, further comprising:
a processing module, configured to parse the random access message sent by the terminal in a manner of the repeated transmission of the random access message after the first sending module sends the random access resource configuration information.

37. A terminal, comprising a processor and a memory, the memory storing a program or an instruction capable of being run on the processor, wherein the program or the instruction, when executed by the processor, implements the steps of the information transmission method according to any one of claims 1 to 28.

38. A network side device, comprising a processor and a memory, the memory storing a program or an instruction capable of being run on the processor, wherein the program or the instruction, when executed by the processor, implements the steps of the information transmission method according to any one of claims 29 to 32.

39. A readable storage medium, having a program or instruction store thereon, wherein the program or the instruction, when executed by the processor, implements the steps of the information transmission method according to any one of claims 1 to 28 or the steps of the information transmission method according to any one of claims 29 to 32.
